# EUROPEAN PATENT APPLICATION

(11) **EP 1 258 807 A2**
(43) Date of publication of application: **20.11.2002**
(21) Application number: 02253270.9
(22) Date of filing: 09.05.2002
(51) Int. Cl.: G06F 12/14

(54) **Illegal access monitoring device, ic card, and illegal access monitoring method**

(30) Priority: 14.05.2001 JP 2001143458
(71) Applicant: Matsushita Electric Industrial Co., Ltd., Kadoma-shi, Osaka-fu, 571-8501 (JP)
(72) Inventor: Masaki, Tadakatsu, Higashi-Hiroshima-shi, Hiroshima-Ken (JP); Kawano, Shinji, Hiroshima-shi, Hiroshima-Ken (JP); Nakabe, Futoshi, Hiroshima-shi, Hiroshima-Ken (JP)
(74) Representative: Dempster, Benjamin John Naftel

(57) **Abstract**

The invention has an object to Provide an illegal access monitoring apparatus which prevents a predetermined memory area from illegal accessing by an application, and also prevents a reverse engineering, an IC card, and an illegal access monitoring method. The invention provides an illegal access monitoring apparatus of which an access monitoring means monitors an access to a predetermined memory area and of which a detection signal generating means generates an illegality detecting signal showing a presence of the illegal access on the basis of the monitoring result by the access monitoring means and illegal information, an IC card, and an illegal access monitoring method.

## Description

The present invention relates to an illegal access monitoring device which monitors an illegal access to a memory area to prevent the illegal access and which also prevents a reverse engineering, an IC card, and an illegal access monitoring method.

Currently, as means for certifying a person or individual easily, a magnetic recording card is utilized. For example, as a bank card. Such a card is mainly utilized for identifying a user by storing ID specifying a user in the magnetic recording card, causing a card reader to recognize the magnetic recording card to read the ID therefrom and inputting a password corresponding to a user.

Furthermore, in recent years, IC (Integrated Circuit) cards tends to become widespread instead of the magnetic recording card. Since information which has been stored in the IC card can easily be rewritten, the IC card can provide various services more than the magnetic recording card. For example, as one of services utilizing the IC card, there is an electronic money service where information corresponding to a bill, a coin or the like is stored in the IC card as an electronic money, and purchases can be made in various shops by using the IC card as if it is a cash.

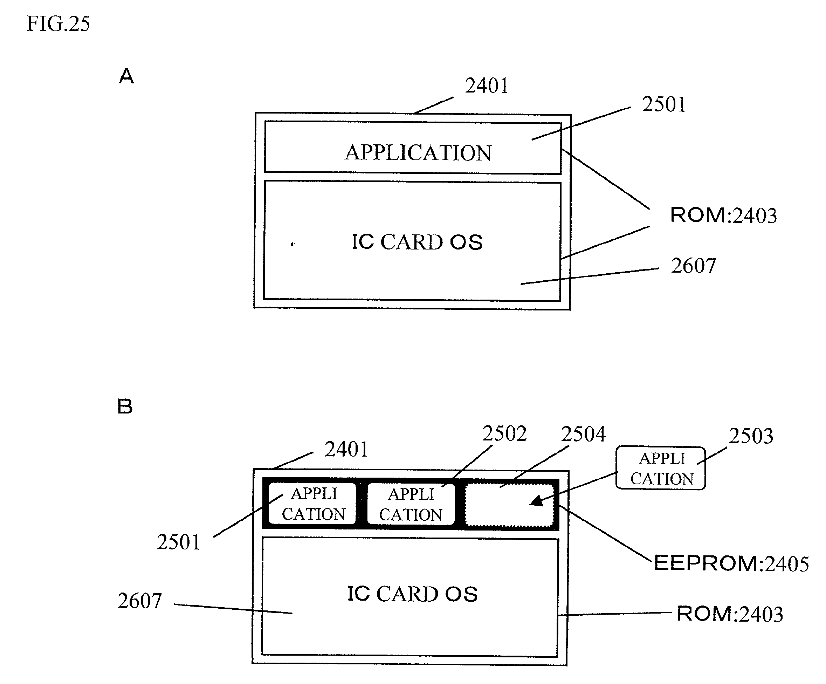

In the electronic money service, for example, the IC card is provided as a card exclusive to an electronic money service. In case that an IC card is provided for exclusive use for a predetermined service, an application 2501 providing an electronic money service operates on an IC card OS (Operating System) in the IC card, as shown in Fig. 25A. In this configuration, the application 2501 is not required to be written in order to set the IC card to be exclusive to the electronic money service, and it is stored, for example, in a ROM 2403 like the IC card OS.

Furthermore, in addition to the electronic money, an IC card utilized such that a user receives various services with one card has been developed. That is, for example, the IC card is a multi-purpose card where user information such as the address or the telephone number of a card owner (user) or the like are stored in the IC card, and the user can receive administrative services using the user information stored in the IC card, and information about a patient's chart (medical treatment record) indicating that the patient was treated by a doctor(s) is stored in the IC card so that the patient can be treated properly by another doctor on the basis of the chart.

As shown in Fig. 25B, the multi-purpose card has such a typical configuration that, a plurality of applications 2501 to 2503 are stored in an EEPROM (Electrically Erasable Programmable Read-Only Memory) 2405 for an IC card OS stored in a ROM 2403, so that a plurality of services are provided utilizing one IC card. Incidentally, the EEPROM may be a FeRAM (Ferroelectric Random Access Memory) or the like. That is, the EEPROM may be a rewritable non-volatile memory.

With this configuration, it becomes possible to provide each function which a user requires at any time by storing applications in the EEPROM 2405, and downloading or erasing each application as needs.

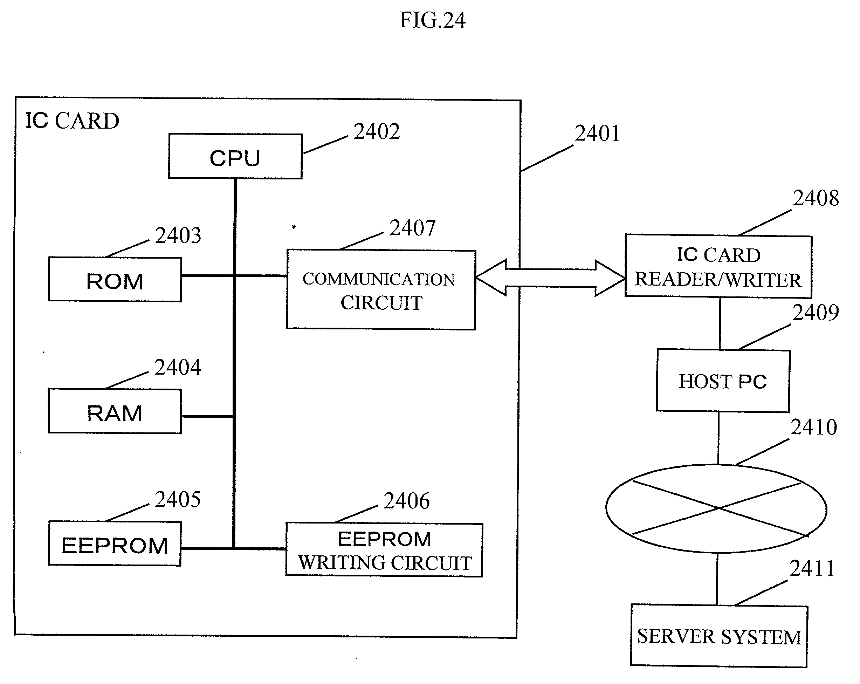

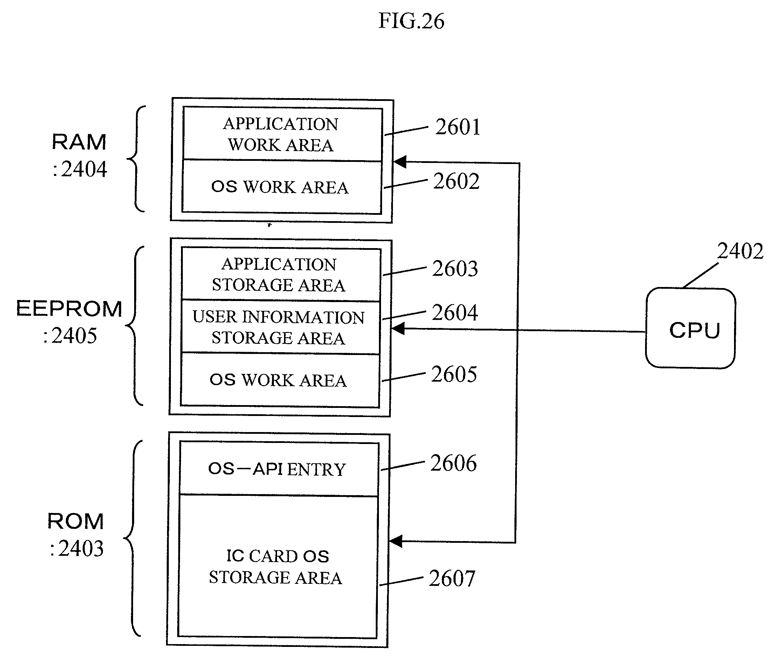

A IC card system using a conventional IC card will be explained below with reference to Figs. 24, 25A, 25B, 26, and 27.

In Fig. 24, an IC card 2401 is provided with a CPU (Central Processing Unit) 2402, a ROM (Read Only Memory) 2403, a RAM (Random Access Memory) 2404, an EEPROM 2405, an EEPROM writing circuit 2406, and a communication circuit 2407. Incidentally, the EEPROM writing circuit 2406 is used for obtaining a high voltage required to erase data when information stored in the EEPROM 2405 can be rewritten.

Now, when the IC card 2401 provides a function provided, for example, in an application 2603, first, the CPU 2402 reads an IC card OS stored in an IC card OS storage area 2607 within the ROM 2403 to execute the same, and an application stored in an application storage area 2603 within the EEPROM 2405 to execute the same under control of the IC card OS.

Here, the IC card OS reserves a memory area, which is required for various calculations, as an OS work area 2602 in the RAM 2404, for example. In addition, the application also reserves an application work area 2601 in the RAM 2404 to use it for various calculations as necessary.

Here, various items of information which the IC card OS or various applications utilizes, for example, card ID information specific to each IC card 2401, key information for decoding, index information for indicating a writing area and the like is stored in a work area of OS utilizing non-volatile (OS work area 2605), that is, the EEPROM 2405. Also, various items of information about a user utilizing the IC card or the like is stored, for example, in a user information storage area 2604.

The above is an explanation about basic operation and configuration of the IC card 2401, and a case that the IC card further provides a function of the electronic money service will be explained briefly. Incidentally, when the IC card provides the function of the electronic money service, various processings for causing the IC card to perform the function of the electronic money service are described with a predetermined programming language and are stored in a ROM 2403 or an EEPROM 2405.

First, when the IC card provides the electronic money service, for example, information about an amount of money of the IC card 2401 is stored in the OS work area 2605 in the EEPROM 2405. The information about an amount of money is, for example, a value from which the value of a price of an article is subtracted by purchasing the article using the IC card 2401, and it may, for example, be expressed as 1,000 yen.

When a user of the IC card 2401 has purchased an article of 3,000 yen using the IC card 2401, for example, the user inserts the IC card 2401 into a IC card reader/writer 2408. However, when information can be read from/written in the IC card 2401 in a non-contacting manner (a contactless IC card), such a process can be performed by bringing the IC card 2401 close to the IC card reader/writer 2408 within a distance where communication can be preformed between the both.

When the IC card 2401 is inserted into the IC card reader/writer 2408, the application 2603 in the IC card 2401 communicates with a host PC 2409 via the external communication circuit 2407 constituting the IC card 2401 and the IC card reader/writer 2408. And an authentication is made about whether or not the respective devices (the IC card and the IC card reader/writer, or the IC card and the host PC) are legal communication partners. The authentication will be performed in the following manner. That is, when an authentication must be performed, the application call a specific API (Application Program Interface) provided by the IC card OS and stored in an OS-API entry 2606 (memory area).

Here, when an authentication API is called out, for example, the IC card OS calls another API described in the authentication API or a subroutine in the IC card OS to perform predetermined processings so that an authentication with the IC card reader/writer 2408 or the host PC 2409 is performed. When there is a problem in the authentication, "1" is returned back to the application 2603 as a result code, and when there is no problem, "0" is returned back to the application 2603 as the result code.

The application 2603 which has received the result code performs processing corresponding to the received result code.

When it has been confirmed in the authentication that the partner devices are legal, the host PC 2409 then transmits a request of subtracting 3,000 yen from the amount information to the IC card 2401 via the IC card reader/writer 2408.

When the application receives the request for subtraction of 3,000 yen, it transmits a request for reducing 3,000 yen from the amount information stored in the OS work area 2605 to the IC card OS calling the API like the above.

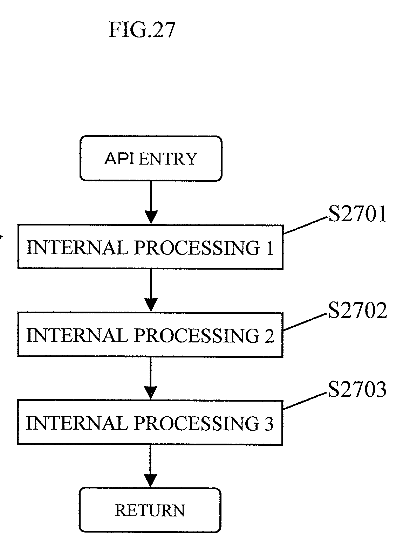

The IC card OS which has received the request for the reduction of the amount via the API confirms the amount information in the OS work area (internal processing 1: Step S2701 in Fig. 27), it reduces 3,000 yen from the amount information when the amount is larger than the amount requested (internal processing 2: Step S2702 in Fig. 27), so that information indicating that the reduction has been made is notified to the application 2603 (internal processing 3: Step S2703 in Fig. 27). Incidentally, instructions (the above Steps S2701 to S2703) received via the API are executed as processings (internal processes) of the IC card OS.

Next, the application, which has received the above notification, communicates with the host PC 2409 via the communication circuit 2407 and the IC card reader/writer 2408, and it notifies the information indicating that 3,000 yen has been reduced from the amount information in the IC card 2401 to the host PC 2409. Incidentally, for example, the API is used for communication with the host PC 2409.

According to the above processings, the amount information stored in the IC card 2401 is changed to reduce by a specific amount of money and the information indicating that the reduction has been made is confirmed by the host PC 2409. Thereafter, the information indicating that the reduction has been made is transmitted to a server system 2411 managing the electronic money from the host PC, for example, via Internet 2410, and various processings (use record management or the like) is performed.

The above is the outline of the electronic money service using an IC card. Further, in the configuration where a plurality of functions are provided in the IC card, namely, a configuration where each application is downloaded or erased according to needs, as shown in Fig. 25B, various applications can be downloaded by performing communication with the host PC 2409 via the IC card reader/writer 2408 using API in the same manner as the authentication in the above electronic money service or the processing of the amount information.

According to the conventional IC cards, it is made possible to download various applications in order to achieve multi-purpose of the IC card and utilization in the increased degree of freedom. Also, when an application is downloaded, an authentication is ordinarily performed about whether the application is right (reliable).

However, even when there is not any problem in the authentication, the downloaded application is not always reliable, and it is sufficiently anticipated that a malicious application passes the authentication to be downloaded.

Once the malicious application is downloaded into the IC card and executed, important information in the IC card, for example, the user information, the amount information, the card ID information and the like becomes freely accessible, so that there may occur various troubles such as erase, leakage of the important information, or the like.

That is, in the conventional IC card, there has not been defense means which, when a malicious application passes an authentication to be downloaded in the IC card and be executed, prevents an illegal action (processing) of the malicious application, for example, an illegal access to a memory area to which an application can not access conventionally.

Also, even when an application to be downloaded is not a malicious one, such processing that data which has been stored in a memory area and which can not be accessed conventionally is erased by accessing to the memory area according to an unexpected action due to a bug or the like may be performed.

Furthermore, as a technique for defending from an illegal access to a predetermined memory area, it is considered to utilize a MMU (Memory Management Unit) mounted on a general-purpose computer as hardware. However, the MMU is one which is applied to a relatively large scale of a computer equipped with a large amount of memory, and it is difficult to apply the MMU to a system with which only a small amount of memory is equipped and which physical size/strength is limited (which is smaller than a card size and has a flexibility to some extent).

That is, an IC chip that realizes functions of an IC card is ordinarily embedded in a card made of plastics. For this reason, it is necessary to assume that the card itself can be flexed and a force can be applied to the card, and the size of the IC chip itself is limited, which results in such a limitation that a complicated circuit can not be built in the card. Also, in an IC card of the so-called non-contacting type among the IC cards, since a power supply to a IC chip is performed from the IC card reader/writer via an antenna formed in the IC card, there occurs such a limitation that a plurality circuit can not be driven due to a remarkable shortage of a power supplied.

In view of the above-described limitation, it is difficult to apply the MMU conventionally used to the IC card, and it becomes essential to realize a simple circuit suitable for the characteristics of the IC card for blocking an illegal access to a predetermined memory area.

Also, since there are many cases that the IC card is used as a substitute for money, the IC card has a tendency to be a target of a reverse engineering. For this reason, even when some defense measure to an illegality is taken, such a case occurs that the defense measure is made ineffective by analyzing the defense measure using the reverse engineering or the like.

The present invention has been made in view of the above circumstances, and an object thereof is to provide an illegal access monitoring apparatus which prevents an illegal access to a predetermined memory area performed by an application with a simple structure and also prevents a reverse engineering, an IC card and an illegal access monitoring method.

The present invention employs the following means in order to achieve the above object. That is, the present invention is based upon an illegal access monitoring apparatus which monitors an illegal access to a memory area. Here, access monitoring means monitors an access to a predetermined memory area, and detection signal generating means generates an illegality detection signal indicating that there is an illegal access on the basis of the monitored results of the access monitoring means and access information. Incidentally, the access information means information which can determine a program which is accessing the memory area, and it is, for example, information about whether or not the access is based upon an OS. Also, the access information is configured so as to be managed by access information managing means. In this case, the access information managing means transmits access information to the detection signal generating means.

With the above configuration, an access to a predetermined area is monitored so that, when there has been an access to the predetermined memory area, determination can be made about whether the access is an access from OS or an access from an application. Therefore, by knowing an access to a memory area to which an access performed by an application is inhibited, various troubles such as disappearing or leakage of important information due to a malicious application are prevented from occurring.

Furthermore, with a configuration where interruption signal generating means which transmits an interruption signal to the CPU when an illegality detection signal generated by the detection signal generating means is received, since a predetermined program can be executed when there has been an illegal access, various countermeasures can be taken against the illegal access.

Also, a configuration where the access monitoring means comprises address storage means in which an address of the predetermined memory area has been stored and comparing means which compares an address acquired from an address bus utilized when the CPU accesses the memory area and the address of the predetermined memory area which has been stored in the address storage means with each other to monitor an access to the predetermined memory area, or a configuration where the access monitoring means monitors a control bus transmitting an instruction when the CPU accesses the memory area and outputs the monitor result according to the instruction can be employed.

With this configuration, access monitoring operations corresponding to various access aspects (reading, writing, and the like) of the CPU can be allowed.

Incidentally, the access information managing means is configured so as to control an access information on the basis of an instruction received via a predetermined interface used when an application utilizes a function provided by OS, and API is used as the predetermined interface so that access information can easily be managed by using the conventional art.

Further, by including an address of the communication circuit utilized for communication with the outside or the EEPROM writing circuit in the predetermined memory area, it is made possible to monitor an illegal access to the communication circuit or the EEPROM writing circuit.

Furthermore, configuration where OS is prevented from interfering in the illegal access monitoring process utilizing an interruption process.

With this configuration, by cooperative processings between applications using an interruption processing performed by a hardware, a malfunction of a software (program) or an illegal access can securely be prevented so that it is possible to solve a problem about an address information updating and an access information updating described later and link processings between the applications.

Furthermore, such a configuration is employed that program notification means which monitors a control bus and notifies a program under execution on the basis of the instruction, the address which has been acquired from the address bus and the address which has been stored in the address storage means is provided and access information is changed on the basis of the notification.

With this configuration, also, since it is made possible to solve the address information updating problem and the access information updating problem described later and describe an application as a series of processings easily, development efficiency of an application can be increased.

Also, as a configuration for preventing a reverse engineering, such a configuration can be employed that determination means to which a clock is input from clock supplying means supplying clocks to the CPU to determine whether or not the rate of the clock is normal and nullifying means which transmits an illegality detection signal to the interruption signal generating means on the basis of the result obtained by the determination of the determining means are provided.

The determining means can take a configuration where determination about whether or not the rate of the clock applied to the CPU is normal is made by comparing the input clock and a reference voltage which is a threshold value for transmission of an illegality detection signal with each other or a configuration where such a determination is made by comparing the input clock and a clock generated by independent clock generating means which generates a clock independent of a clock applied to the CPU with each other.

Since the illegal access monitoring apparatus described above can be configured with simple circuits or programs, it can easily be applied to even an IC card whose size/strength is limited physically. That is, the illegal access monitoring apparatus can be applied to an IC card without any problem.

In the conventional art, there has not been any means for preventing an illegal action (processing) of a malicious application which has been loaded in an IC card, but such an illegal action (processing) can be prevented by providing the illegal access monitoring device in the IC card.
Fig. 1 is a schematic function block diagram of an illegal access monitoring apparatus and an IC card according to the present invention;
Fig. 2 is a detailed block diagram of the illegal access monitoring apparatus;
Fig. 3 is an image diagram of a memory area showing an access monitor target;
Fig. 4 is a flowchart showing access information change using an API;
Fig. 5 is a flowchart showing processings of access monitoring means and information managing means;
Fig. 6 is flowchart showing processings of detection signal generating means and interruption signal generating means;
Fig. 7 is an image diagram of each memory area when a plurality of applications have been executed;
Fig. 8 is diagram showing configuration examples where a plurality of CPUs are provided;
Fig. 9 is a diagram showing a configuration example where a shared memory area is provided;
Fig. 10 is a schematic diagram for explaining an interruption processing;
Fig. 11 is a schematic diagram of respective means in a fourth embodiment;
Fig. 12 is an image diagram where an application is executed on an CPU in the fourth embodiment;
Fig. 13 is a diagram showing a memory image in the fourth embodiment;
Fig. 14 is a flowchart showing a series of program processings in the fourth embodiment;
Fig. 15 is a flowchart showing processing of an interruption routine in the fourth embodiment;
Fig. 16 is a first flowchart showing a series of program processings in a fifth embodiment;
Fig. 17 is a second flowchart showing a series of program processings in a sixth embodiment;
Fig. 18 is an image diagram where an application is being executed on a CPU in the fifth embodiment;
Fig. 19 is a schematic diagram of respective means in the fifth embodiment;
Fig. 20 is a diagram showing a memory image in the fifth embodiment;
Fig. 21 is a schematic function block diagram of an illegal access monitoring apparatus and an IC card in the sixth embodiment;
Fig. 22 is a first schematic function block diagram of nullifying means in the sixth embodiment;
Fig. 23 is a second schematic function block diagram of the nullifying means in the sixth embodiment;
Fig. 24 is a schematic function block diagram of conventional IC card and IC card system;
Figs . 25 is a image diagram showing an OS and an application inside an IC card;
Fig. 26 is an image diagram of a memory area; and
Fig. 27 is a flowchart showing processing of an API.

For further understanding of the present invention, embodiments of the present invention will be explained below with reference to the drawings. Incidentally, the following embodiments are only embodied examples but they are not intended to limit the technical scope of the present invention. Also, in the following embodiments, an OS and an application are used in different manners for easy understanding, but both the OS and the application are programs.

### First Embodiment

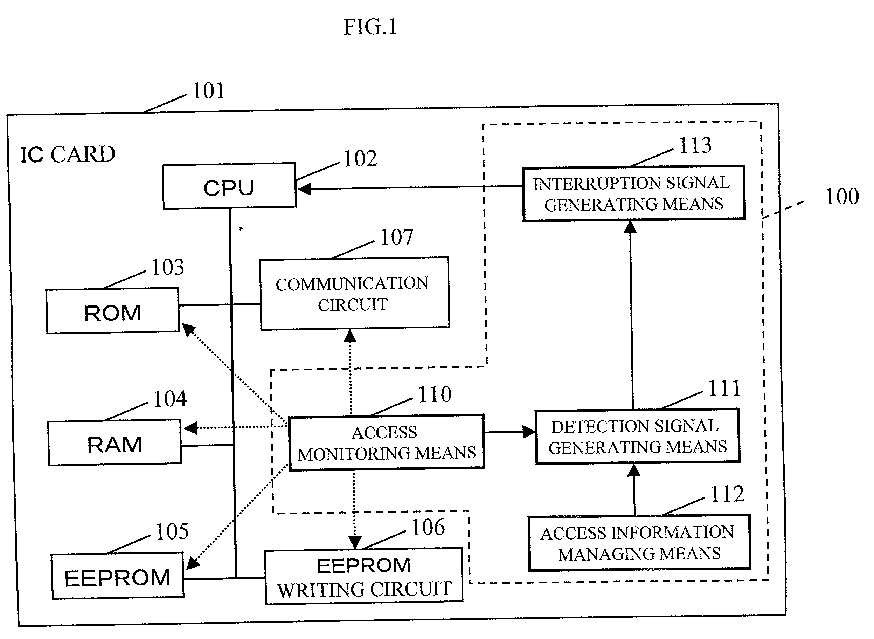

Fig. 1 is a schematic function block diagram of an illegal access preventing apparatus and an IC card in a first embodiment. Here, like the configuration of the IC card which has been described in the conventional art, the IC card according to the first embodiment comprises a CPU 102, a ROM 103, a RAM 104, an EEPROM 105, an EEPROM writing circuit 106 and a communication circuit 107.

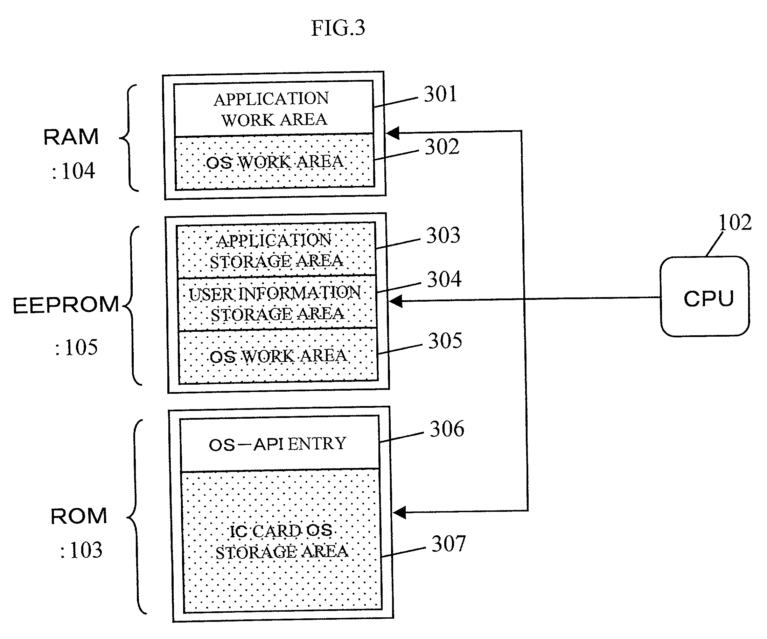

Here, like the prior art, as shown in Fig. 3, for example, an application work area 301 and an OS work area 302 are reserved in the RAM 104, an application (program) is stored in an application storage area 303 of an EEPROM 105, user information or the like is stored in a user information storage area 304 thereof, and an OS work area 305 may be reserved therein, as needs. Also, such a configuration is the same as that of the prior art that the communication circuit 107 is utilized for communication with an external terminal of an IC card reader/writer, a host PC or the like, and the EEPROM writing circuit 106 is used for obtaining a high voltage necessary to erase data when information in the EEPROM 105 is rewritten.

In addition to the above configuration, the first embodiment is further provided with access monitoring means 110, detection signal generating means 111, access information managing means 112 and interruption signal generating means 113 which respectively configure the illegal access monitoring apparatus 100, and whose processings will be described in detail later.

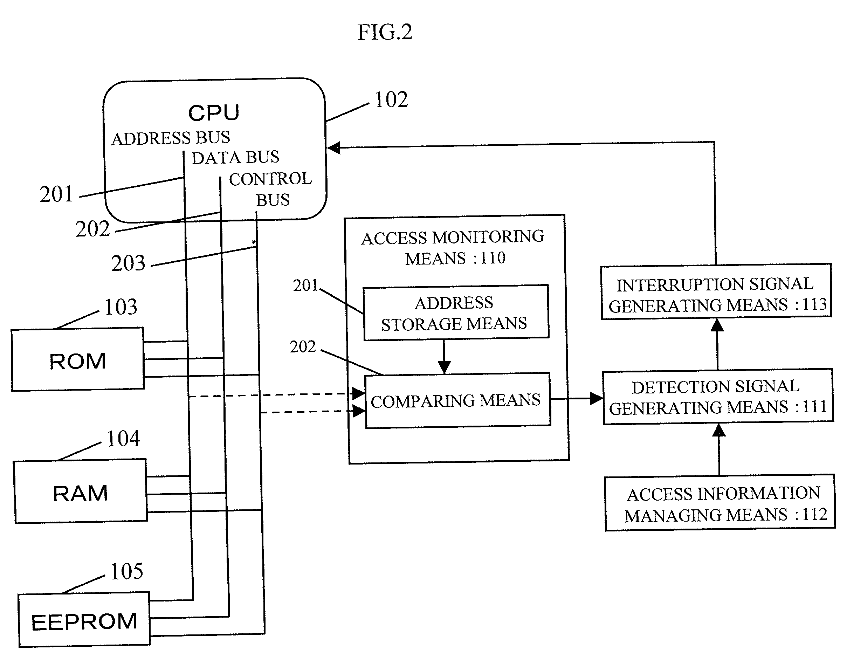

First, a process where the CPU 102 reads/writes data (including a program or the like) from/in the ROM 103, the RAM 103 and the EEPROM 105 will be explained with reference to Figs. 1 to 3.

When the CPU 102 reads data item in the memory area in each memory, three buses connected from the CPU 102 to each memory are used, namely, an address bus 201, a data bus 202 and a control bus 203 in this embodiment.

When the CPU 102 reads a predetermined data item from data stored in each memory, an address which is a target is transmitted to the ROM 103, the RAM 104, and EEPROM 105 via the address bus 201. Simultaneously, reading of data stored in the address is transmitted by transmitting "read" command from the control bus 203. When each memory has received the address and the "read" command, the memory reads the contents in the address if the address is assigned to the memory itself. Next, the CPU 102 receives a signal (contents) read from the memory via the data bus 202.

The above is processing for reading data from each memory. When data writing is performed to each memory, an address and "write" command are respectively transmitted from the CPU 102 to each memory via the address bus 201 and the control bus 203, and data to be written is further transmitted to each memory via the data bus 202.

Data writing is performed on each memory which has received each signal (command) by storing the transmitted data in the predetermined memory area.

The reading and writing are performed in the CPU 102. Control of the CPU is performed by the IC card OS, and an application performs various processings under control of the IC card OS. Incidentally, the application reserves a work area necessary for processings of the application, for example, within the RAM 104 as the application work area 301.

Here, for example, an IC card OS which can execute a plurality of applications or the like is provided with an interface providing a basic function of the IC card OS to the application, for example, anAPI. The API is stored, for example, in an OS-API entry within the ROM 103 shown in Fig. 3, and it is executed by the IC card OS after it is called by the application. Specifically, in case that the application requires the address of a user, for example, the application calls an address acquiring API. When the address acquiring API is called, the IC card OS executes the address acquiring API to read the address of the user from the user information storage area 304 stored in the EEPROM 105 and notify the same to the application.

The above is a general processing for an application. That is, the memory area which the application reads (accesses) is limited to the application work area 301 and the OS-API entry 306. In other words, when the application has accessed to a memory area other than the application work area 301 and the OS-API entry 306, i.e., the OS work area 302, the application storage area 303, the user information storage area 304, the OS work area 305 and the IC card OS storage area 307, such an access can be determined to be an illegal access.

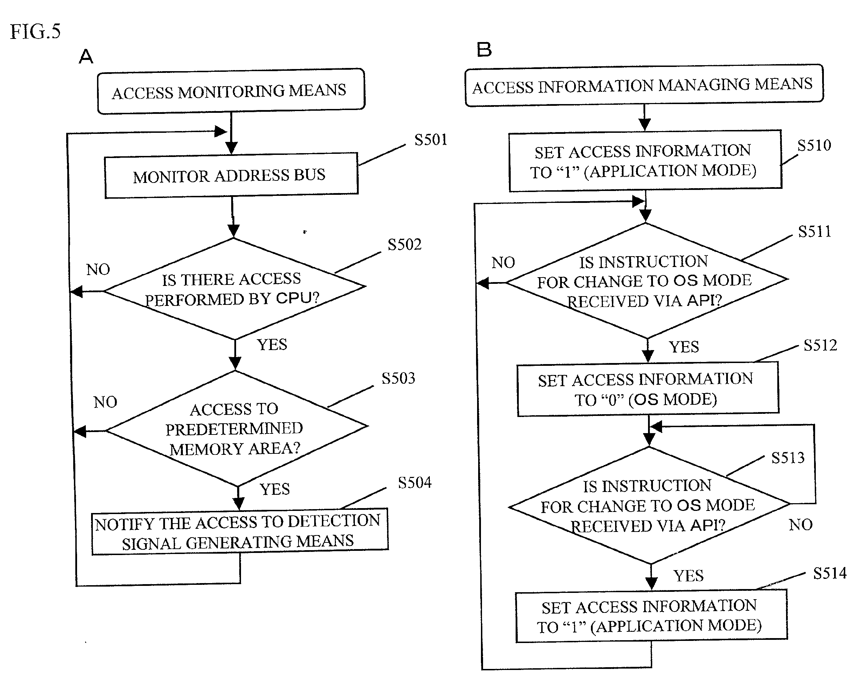

In order to detect the illegal access, first, it is necessary to recognize whether a program which is accessing each memory area is an IC card OS or an application and the recognition can be performed by access information which the access information managing means 112 manages. That is, when the IC card OS first starts and the IC card OS activates a predetermined application, the IC card OS reads the application from the application storage area 303 in the EEPROM 105, and then it transmits, for example, an instruction of changing access information to "1" to the access information managing means 112 (Step S510 in Fig. 5B).

The "1" of the access information indicates an application mode, i.e., that a program which is currently running (processing) on the CPU is an application.

For example, it is assumed that the application performs processing utilizing the application work area 301 in order to provide various functions and a need to reference to the address of a user included in the user information 304 has occurred. In this case, for example, the application calls the address acquiring APT from the OS-API entry 306 and it delivers processing to the IC card OS.

Simultaneously with the calling of the address acquiring API, the IC card OS which has been delivered with the processing transmits an instruction of changing the access information to "0" (OS mode) to the access information managing means 112 in a first processing within the API (address acquiring API) (Step S511 in Fig. 5B).

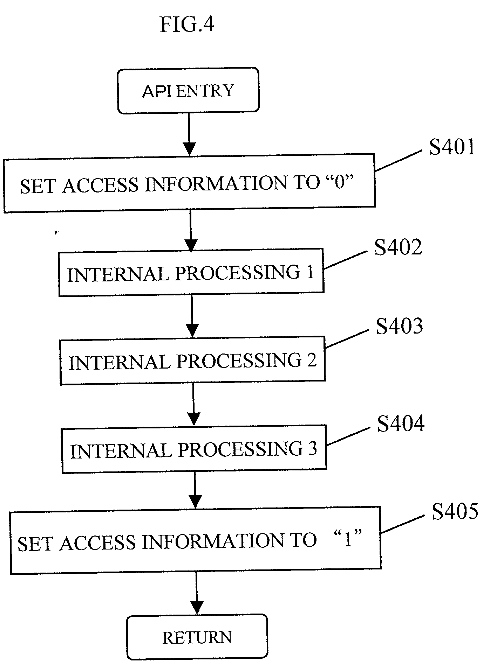

The access information managing means 112 which has received the instruction changes the content of the access information managed thereby to "0" (Step S511 Yes → Step S512 in Fig. 5B; Step S401 in Fig. 4).

After the content of the access information has been changed to "0", the IC card OS accesses, for example, another API or various sub-routines stored in the IC card storage area 307 to execute the same, thereby performing internal processings 1 to 3 (Steps S402 to S404 in Fig. 4).

When the internal processings 1 to 3, the acquirement of the address of the user stored in the user information 304 by the IC card OS, has been completed, the IC card OS transmits an instruction of changing the access information to "1" (application mode) to access information managing means 112.

The access information managing means 112 which has received the instruction changes the content of the access information managed thereby to "1" (Step S513 Yes → S514 in Fig. 5B: Step S405 in Fig. 4).

As described above, by inserting the instructions for changing the access information in the start and end of the API, when an API provided by the IC card OS exists, an access to a predetermined memory area can be made as the OS mode. Incidentally, by using the API, the access information can easily be managed using the conventional technique.

Next, assuming the above state of the access information, processings of the access monitoring means 110, the detection signal generating means 111 and the interruption signal generating means 113 will be explained.

The processing of an access to each memory performed by the CPU 102 proceeds as described above, and the access monitoring means 110 always monitors the address bus 201 (Step S501 in Fig. 5A). That is, when each memory is accessed by the CPU 102, the access monitoring means 110 can know information about the fact of the access and a memory area (memory address) being accessed (Step S502 in Fig. 5A).

When the access is generated, comparing means 202 constituting the access monitoring means 110 reads addresses from the address storage means 201 storing memory areas, an access to which should be monitored, namely, in this embodiment, the addresses (range: memory areas) of the OS work area 302, the application storage area 303, the user information storage area 304, the OS work area 305 and the IC card OS storage area 307 to compare them with an address which are being currently referred to by the CPU 102.

Here, when the comparing means 202 compares the addresses stored in the address storage means 201 with the address which the CPU 102 is being referencing to detect a coincidence (or within the range), a notification indicating that there is a possibility that the access is an illegal access to the predetermined memory area is sent to the detection signal generating means 111 (Step S503 Yes → Step S504 in Fig. 5A).

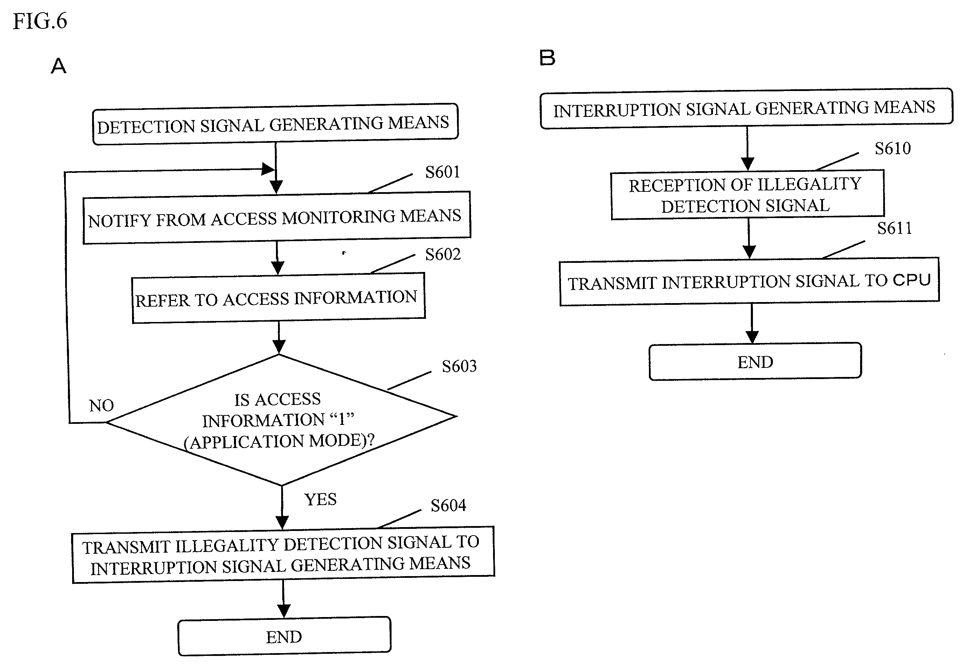

Then, the detection signal generating means 111 which has received the notification from the access monitoring means 110 refers to the access information which the access information managing means 112 manages (Step S601 → Step S602 in Fig. 6A).

In case that the access information is "1" (the application mode), since an access to the memory area is not an access performed by the IC card OS but it is an access performed by the application, namely, an illegal access, an illegality detection signal is transmitted to the interruption signal generating means 113 (Step S603 Yes → Step S604 in Fig. 6A).

When the interruption signal generating means 113 receives the illegality detection signal from the detection signal generating means 111, it transmits an interruption signal to the CPU 102 (Step S610 Yes → S611 in Fig. 6B).

The CPU 102 which has received the interruption signal stops processing of an application which is being performed at this time, and performs, for example, a routine which is called a predetermined interruption handler, namely, a program according to the interruption signal.

The processing of the CPU 102 performed at a time of reception of the interruption signal may be any one. However, for example, since there is a possibility that the application is malicious, for example, such processing may be performed that the function of the IC card itself is stopped or only the application is deleted.

As described above, in case that an access to the predetermined memory area is monitored and an access thereto is detected, determination is further made about whether the access is an access from an OS or an application, so that an access to the memory area to which an access performed by an application is inhibited can be found. For this reason, various troubles such as disappearing or leakage of important information due to a malicious application, or the like can be prevented.

Also, since each of the above means (the access monitoring means 110, the access information managing means 112, the detection signal generating means 111, and the interruption signal generating means 113) is configurable by a simple circuit or a program, it is easily applicable to an IC card whose physical size/strength is limited.

Furthermore, conventionally, there has been not any means for preventing an illegal action (processing) of a malicious application downloaded in an IC card, but the illegal action (processing) can be prevented by applying the present invention to the IC card.

Incidentally, the access information managing means 112 stores the access information in the register of the CPU 102. However, the access information is not required as information necessarily, but the access information managing means 112 may transmit a signal for turning the detection signal generating means 111 on/off thereto.

Monitoring not only the address bus 201 but also the control bus 203, the access monitoring means 110 can monitor an illegal access according to reading and writing of data. That is, any processing can be performed case by case such as processing where an access of an application is allowed at a reading time of data but an access of an application at a writing time of data is determined to be an illegal access.

### Second Embodiment

In a second embodiment, a case that the access monitoring means 110 monitors an illegal access to the communication circuit 107 and the EEPROM writing circuit 106 will be explained.

In the first embodiment, the processing performed when the CPU 102 accesses the ROM 103, the RAM 104, and the EEPROM 105 has been explained briefly, but the CPU 102 generally accesses the communication circuit 107 and the EEPROM writing circuit 106 like the above.

That is, in the CPU 102 side, addresses similar to the respective memories are given to the communication circuit 107 and the EEPROM writing circuit 106, and the CPU 102 performs transmission/reception of data or the like by transmitting an instruction and data to each of the addresses.

Accordingly, by storing the addresses of the communication circuit 107 and the EEPROM writing circuit 106 to the address storage means 201 configuring the access monitoring means 110 in the first embodiment, it becomes possible to monitor an illegal access to the communication circuit 107 and the EEPROM writing circuit 106.

### Third Embodiment

Subsequently, in a third embodiment, processing where a plurality of applications is executed on the IC card 101 will be explained.

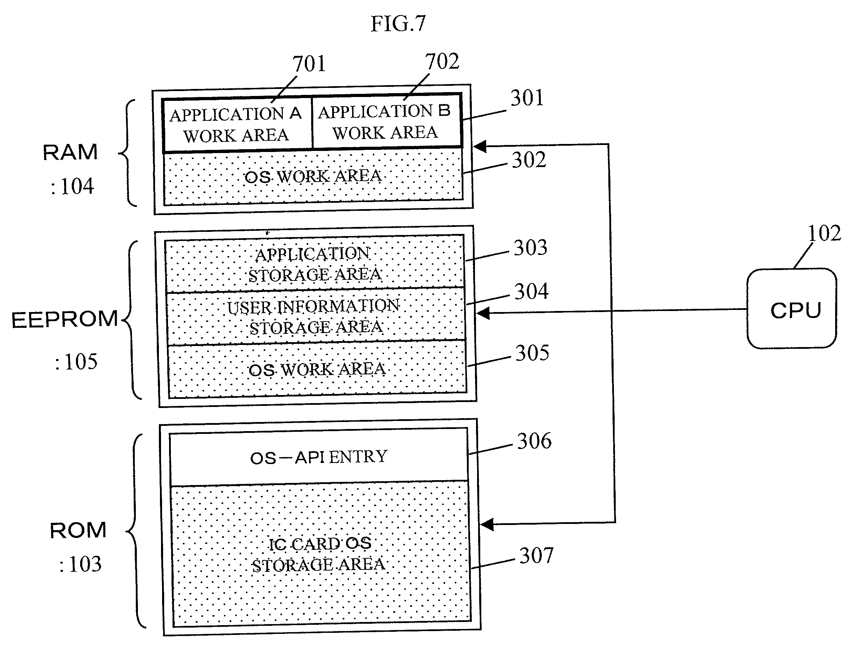

Fig. 7 shows an image diagram of respective memory areas of the RAM 104, the EEPROM 105 and the ROM 103 when a plurality of applications (application A and application B) is executed. That is, for example, when two applications A and B stored in an application storage area 303 are respectively executed, an application A work area 701 which is a work area for the application A and an application B work area 702 which is a work area for the application B are provided in an application work area 301.

Here, for example, it is assumed that the application A is an illegal application. If the application A can access the application B work area 702 freely, it is supposed that the application A acts to prevent the application B from functioning normally or it abuses the function of the application B.

Specifically speaking, for example, such a case is considered that the application A downloaded is a program for performing electronic commerce and the application A reduces the money amount according to an electronic commerce utilizing an electronic money managing program (application B) provided in the IC card in advance. Where the application A can access the electronic money managing program illegally, such an illegality cause that the electronic money stored in the IC card is not reduced though an article has been purchased through an electronic commerce, for example.

In the third embodiment, just before the IC card OS delivers processing to an application, namely, when an instruction of changing access information to "1" is transmitted to the access information managing means 112, the content of the address storage means 201 within the access monitoring means 110 is changed.

For example, when the processing is transferred to the application A, the IC card OS stores the address of the application B work area 702 in the address storage means 201. Therefore, for example, when the application A accesses the application B work area 702 after the storage, a detection signal is generated from the detection signal generating means 111, as explained in the first embodiment. That is, the application A is made impossible to access even a memory area regarding the processing of the application B. Of course, when the processing is transferred to the application B, the IC card OS stores the address of the application A work area 701 in the address storage means 201 and further deletes the address of the application B work area 702.

As described above, by allowing the address stored in the address storage means to be rewritten in the IC card OS, it becomes possible to prevent an illegal access among the respective applications even when a plurality of applications are activated.

Incidentally, the memory address of each application work area may be determined in advance, but it may be a memory address allocated dynamically at a time of activation of each application.

### Fourth Embodiment

Next, in a fourth embodiment, monitoring and processing of an illegal access that does not depend on OS will be explained.

In the above first to third embodiments, for example, the explanations have been made assuming that there is a maliciousness or bug in an application. However, an OS is also an application in a broad sense, and there is an anxiety that the OS can be provided as a malicious program. Also, the OS tends to become larger in its program scale (the number of steps) as compared with the application. Therefore, it is considered that a possibility that a bug exists in the OS becomes higher than that in the application. It is not preferable in viewpoint of a security to trust such an OS completely.

Specifically, undesirable points in the first to third embodiments are as follows:
- A point that, when a plurality of applications are executed in the first to third embodiments, it is necessary to update an address stored in the address storage means 201 in an OS (hereinafter, referred to as "an address information update problem").
- A point that, in the access information stored in the access information managing means 112, an OS must change the access information regarding whether a program being executed currently is an OS or it is one other than an OS (an application) (hereinafter, referred to as "an access information update problem").

That is, it should be avoided that an OS that is not reliable sufficiently executes processing concerning the security.

Therefore, three configurations for solving the above problem easily are shown below. The examples shown below are not directed for solving the above problems fully, and various problems occurring from these configurations will also be described below.

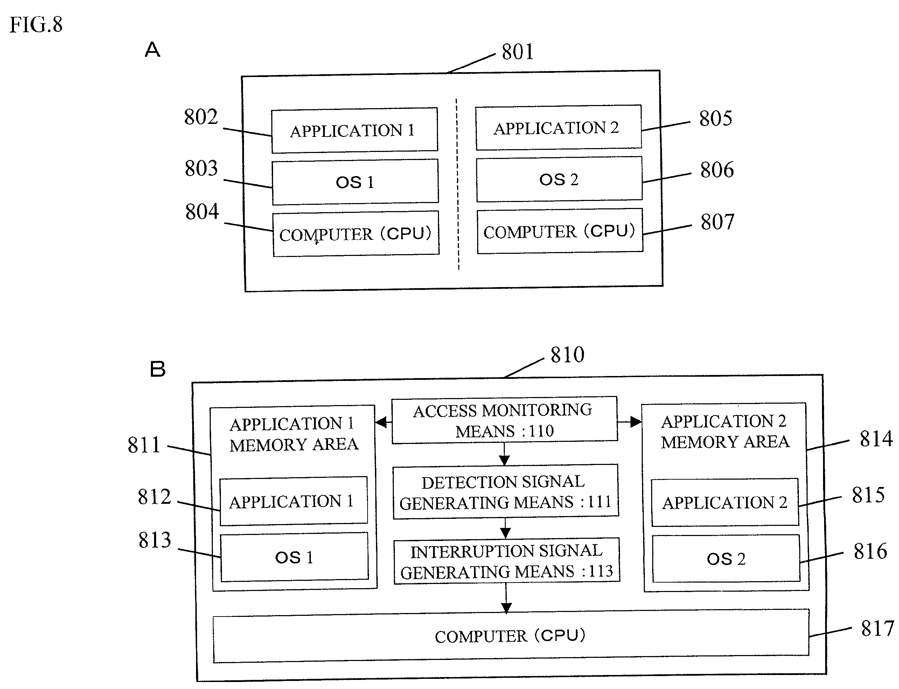

A first example has a configuration where a plurality of CPUs are provided, as shown in Fig. 8A. That is, for example, two applications, i.e., application 1 (802) and application 2 (805), are caused to operate on different CPUs 804 and 807 via an OS1 (803) and an OS2 (806). Thereby, this example functions as an embodiment similar to the first embodiment, so that the above address update problem can be solved and a plurality of applications can be executed by one IC card.

However, the access information update problem is still left, and CPUs of the same number of applications executed concurrently are required so that there occurs such a problem that the cost of the IC card is increased. Also, there newly occurs a problem that processing between the application 1 (802) and the application 2 (805) cannot be performed in a cooperative processing.

Next, a second example is shown in Fig. 8B. In an IC card 810, for example, two applications, i.e., an application 1 (812) and an application 2 (815), are caused to operate on one CPU 817. At this time, controls on the respective applications are respectively performed by an OS1 (813) and an OS2 (816). Incidentally, since an OS is allocated for each application, the OS can be regarded as an application so that these OSs are allocated with an application 1 memory area 811 and an application 2 memory area 814, respectively.

In this case, such a problem that the cost of the IC card is increased can be solved. Further, since one OS is allocated to one application, it is unnecessary to process the access information between the application 1 (812) and the OS1 (813). Incidentally, it becomes necessary to perform processing of the access information between the application 1 memory area 811 and the application 2 memory area 814. Further, for example, when the application 1 accesses the application 2 memory area 814, processing is stopped by the above-described access monitoring means 110, detection signal generating means 111 and interruption signal generating means 113, for example. As a result, such a problem is not solved that a cooperative processing between the application 1 (812) and the application 2 (815) can not performed.

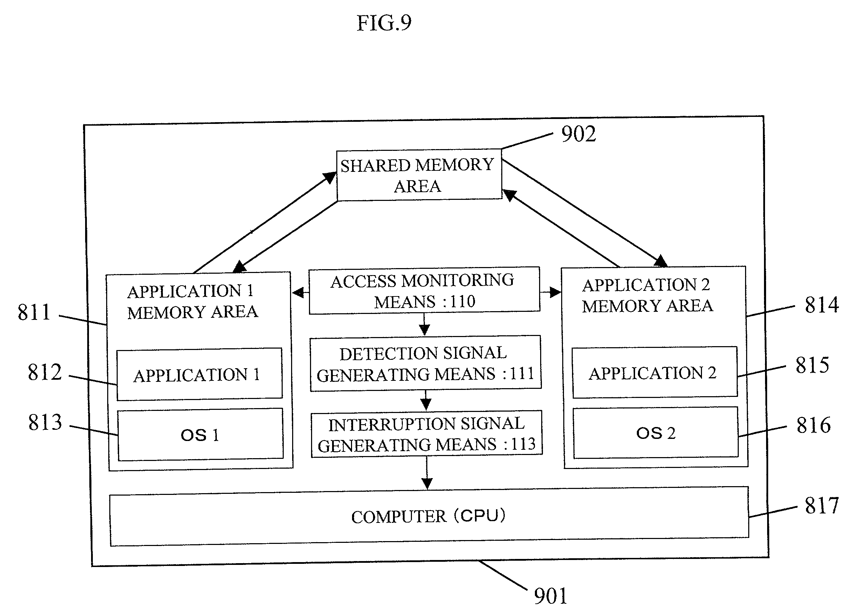

Next, a third example is shown in Fig. 9. In an IC card 901 of the third example, such a configuration is employed that a shared memory area 902 which is out of a monitor target of the access monitoring means 110 is provided within the above IC card 810. Here, for example, the application 1 (812) writes a command to the application 2 (815) into the shared memory area 902 and the application 2 (815) reads the command from the shared memory area 902 to execute the same, thereby writing the result into the shared memory area 902. Subsequently, the application 812 continues the processing by reading the above result out of the shared memory area 902.

With this configuration, a cooperative processing between applications is apparently possible, wherein, for example, information indicating that the application 1 (812) has written a command must be notified to the application 2 (815). However, a case that the application performs the above notification to the application 1 (812) via the OS1 (813) means an interposition of the OS1 (813), which does not provide a solution of the problem. Of course, a case that the application 1 (812) directly calls the application 2 (815) is out of the question.

In the fourth embodiment, processings in an illegal access monitoring apparatus and an IC card with a further robustness achieved by avoiding processing on security performed by the OS will be explained below.

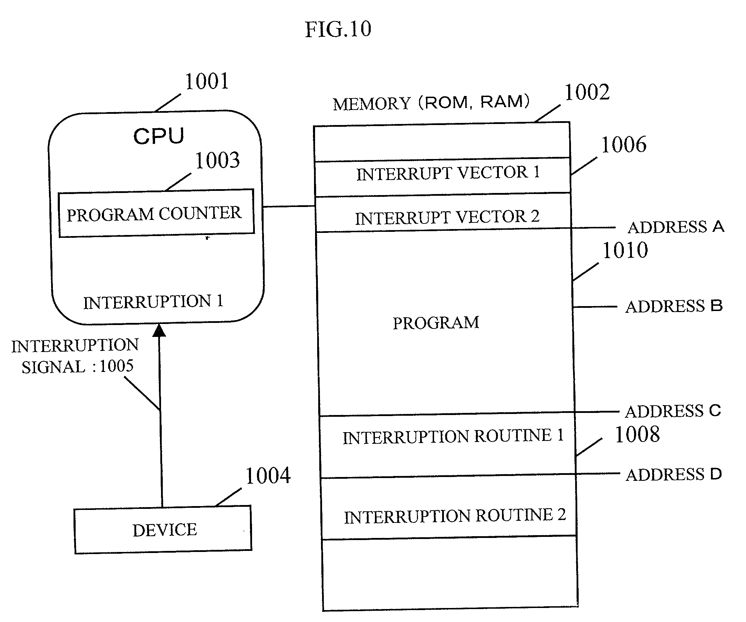

Incidentally, for easy understanding of the fourth embodiment, first, an outline of a conventional interruption processing will be explained briefly with reference to Fig. 10.

For example, data transfer from such a device as a keyboard, a mouth or the like to a CPU is performed completely asynchronously with processing of the CPU. For this reason, it is inefficient to wait for a keyboard input whose occurrence time is not known. Therefore, an interruption processing is configured such that, another program is being executed by the CPU, and an interruption is performed in the execution of the another program when an input occurs from the keyboard, so that the processing for the keyboard input is performed in the CPU.

The above examples will be explained specifically with reference to Fig. 10. Fig. 10 is a schematic diagram for explaining an interruption processing.

First, a CPU 1001 reads a program from a predetermined address of a memory 1002 and executes the program sequentially. Here, for example, it is assumed that the CPU 1001 is executing a command stored in an address B of a program 1010 stored from an address A to an address C. The address B of the command being executed currently is managed by a program counter 1003 of the CPU 1001, and the address of the program counter 1003 is changed for each completion of execution of each command.

Here, for example, in case that input is performed through such a device 1004 as a keyboard, a mouth or the like, an interruption signal 1005 is transmitted from the device 1004 to the CPU 1001. An interruption is determined for each device, and it is assumed that, for example, an interruption from the device 1004 is "Interruption 1".

When the interruption signal 1005 is received by the CPU 1001, the CPU 1001 once saves the address B of the program 1010 being currently executed and stored in the program counter 1003, and it refers to an interrupt vector 1 (1006) corresponding to the "Interruption 1". Here, the interrupt vector is a memory area where an address of an interruption handler is stored, and the interruption handler is a small program code executed when an interruption occurs.

The CPU 1001 refers to the interrupt vector 1 (1006) to acquire an interruption handler, i.e., an interruption routine 1 (1008) stored from the address C to an address D in this case.

When the CPU 1001 acquires a start address of the interruption routine 1 (1008), it stores the start address into the program counter 1003 and executes the interruption routine 1008 sequentially.

Thereby, an instruction input from the device 1004 is executed as an interruption routine 1 so that movement of a mouse cursor is performed, for example.

When processing of the interruption routine 1 (1008) is completed, the saved address B is written in the program counter 1003 and the program 1010 is executed from the address B.

The above is an example of the conventional interruption processing, where the interruption processing starts according to an interruption signal and a predetermined interruption routine is executed. For this reason, it is considered that this interruption is a remarkably reliable processing.

Now, the conventional interruption processing has been explained, but a further robust security has been realized utilizing the interruption processing in the fourth embodiment.

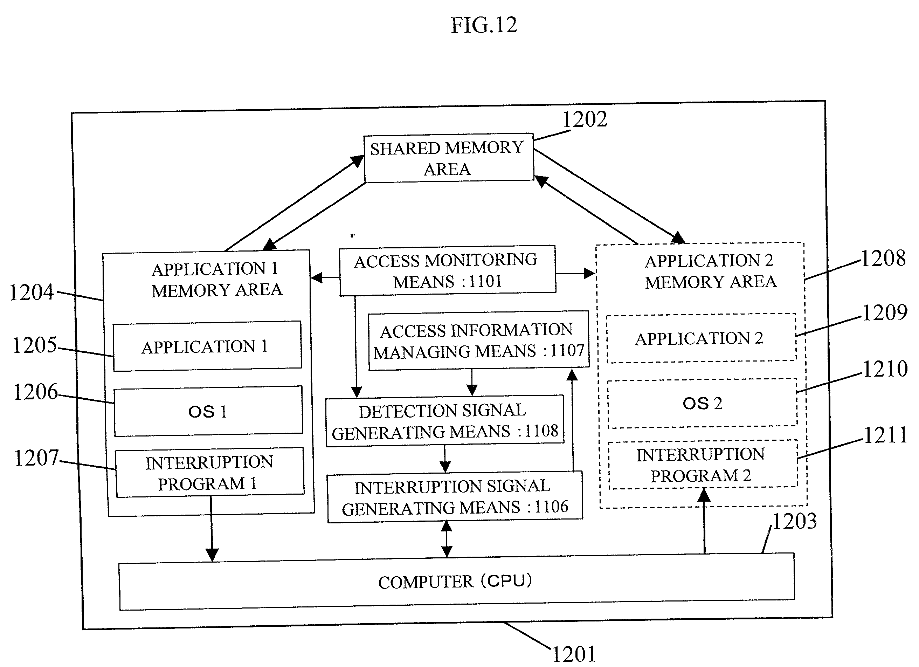

First, a relationship among respective applications in the fourth embodiment will be explained briefly. Fig. 12 shows an image diagram where an application 1 (1205) is being executed on a CPU 1203. Also, an application 2 (1209) is executable on the CPU, as needs. Specifically, as shown in the third embodiment, for example, such a case is considered that an application 1 downloaded is a program performing an electronic commerce and the application 1 is for reducing an amount corresponding to an electronic commerce utilizing an electronic money management program (application 2) provided in an IC card in advance. The fourth embodiment corresponds to such a case that the application 1 (1205) and the application 2 (1209) do not operate as a multitask utilizing a time sharing, but the application 1 (1205) calls the application 2 (1209).

Incidentally, the application 1 (1205) has been stored in an application 1 memory area (1204) and an OS1 (1206) and an interruption routine 1 (1207) which are other programs have been stored in the application 1 memory area (1204), these programs constituting a group of programs. Incidentally, there will occur no problem even if the application 1 (1205) and the OS1 (1206) are defined as an application 1 in a combined manner.

Further, an application 2 memory area 1208 is provided like the application 1 memory area 1204, and an application 2 (1209), an OS2 (1210), and an interruption routine 2 (1211) are stored in the application 2 memory area 1208. Of course, when there are further an application 3 and an application 4, an application 3 memory area and an application 4 memory area are provided like the above.

Accesses to the application 1 memory area 1204 and the application 2 1208 memory area are monitored by access monitoring means 1101. Besides, detection signal generating means 1108, interruption signal generating means 1106, access information managing means 1108, and a shared memory area 1202 are provided, and details of processings thereof will be explained sequentially.

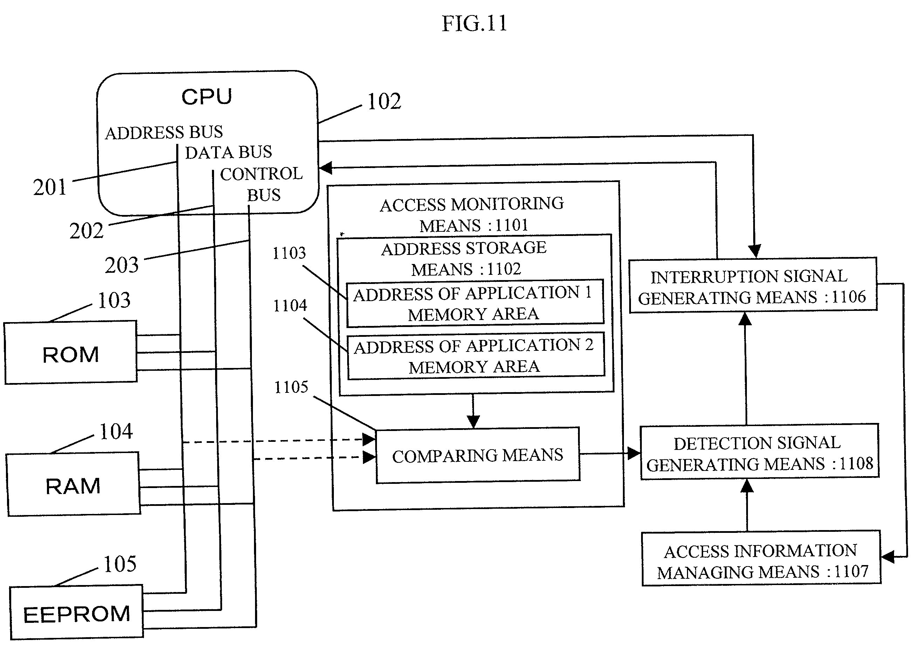

Fig. 11 shows the image diagram shown in Fig. 12 as a hardware configuration.

In Fig. 11, addresses of memory areas stored in address storage means 1102 configuring access monitoring means 1101 are stored in an application unit. That is, an address of a memory area corresponding to an application 1 memory area 1204 in Fig. 12 is stored in an address 1103 of the application 1 memory area, and similarly an address of a memory area corresponding to the application 2 memory area 1208 is stored in an address 1104 of the application 2 memory area. Incidentally, the term "application unit" may be defined as an address comprising an memory area where a predetermined application (program) has been stored and a memory area accessible by the application (program) .

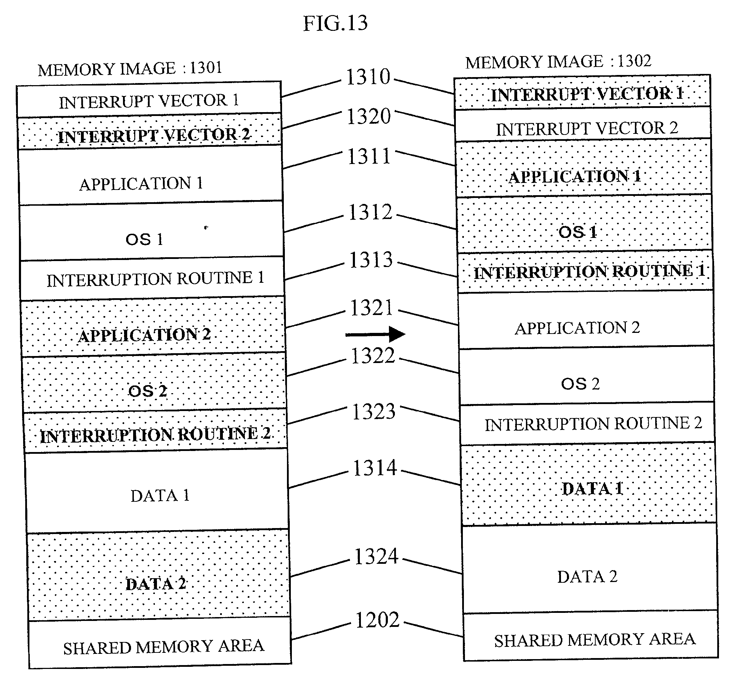

Also, a memory image 1301 shown in Fig. 13 is an image showing respective program areas on the ROM 103, the RAM 104 and the EEPROM 105. A program belonging to the application 1 memory area 1204 and a program belonging to the application 2 memory area 1208 are stored in the memory image and a memory (shared memory area 1202) utilized as a shared memory area is secured therein.

That is, an interrupt vector 1 (1310), an application 1 (1311), an OS 1 (1312), an interruption routine 1 (1313), and data 1 (1314) shown in the memory image 1301 are programs belonging to the application 1 memory area 1204 and data which the programs utilize, and their addresses are stored in the address 1103 of the application 1 memory area.

Similarly, an interrupt vector 2 (1320), an application 2 (1321), an OS 2 (1322), an interruption routine 2 (1323) and data 2 (1324) are programs belonging to the application 2 memory area 1208 and data which the programs utilize, and their addresses are stored in the address 1104 of the application 2 memory area.

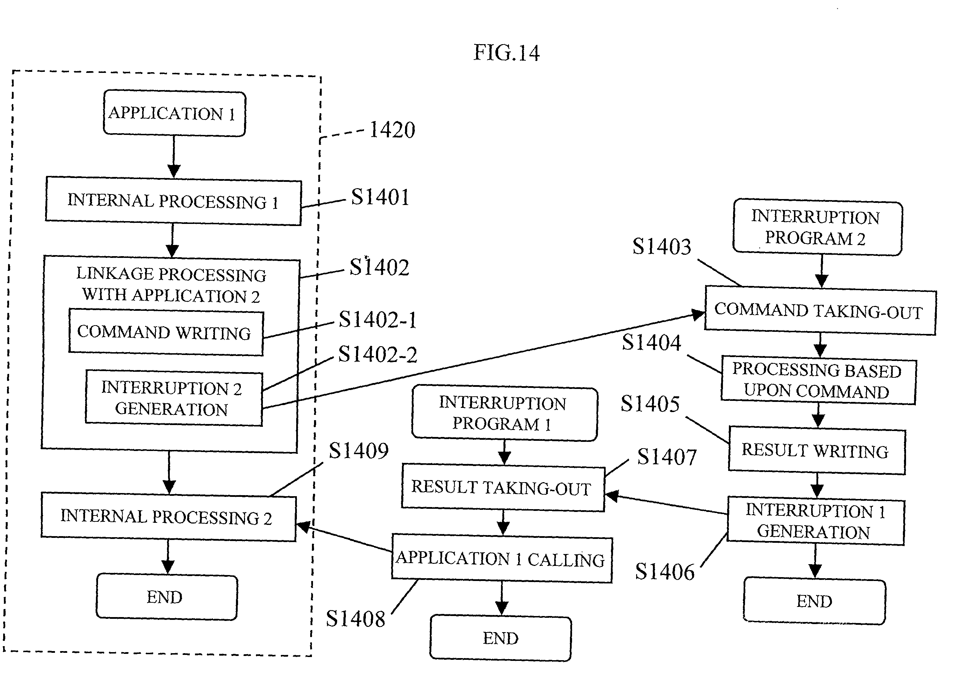

Subsequently, assuming the above configuration, operations of respective applications will be explained. For easy understanding, processing of the application 1 (1205) is defined as processing shown with a dotted line 1420 in Fig. 14. Also, access information stored in access information managing means 1108 is defined as "1" indicating that a program being operating currently belongs to the application 1 memory area 1204.

First, in a state where the application 1 (1205) is performing an internal processing 1 (Step S1401), for example, an access from the CPU 102 to each memory is necessarily an access to either one of the interrupt vector 1 (1310), the application 1 (1311), the OS 1 (1312), the interruption routine 1 (1313) and the data 1 (1314), or an access to the shared memory area 1202. The access is always monitored by a comparing means 1105 via the address bus 201. Here, the comparing means 1105 outputs "1" indicating that a memory area being currently accessed corresponds to the application 1 memory area 1204 on the basis of an address stored in the address storage means 1102 and an address acquired via the address bus 201.

The detection signal generating means 1108 which has received the output "1" acquires access information from the access information managing means 1107. Here, since the access information is "1" indicating that the program being currently operating belongs to the application 1 memory area 1204, the detection signal generating means 1108 does not generate a detection signal.

Incidentally, in a state where the application 1 (1205) being performing processing (Step S1401 in Fig. 14), since the value of the access information is "1", the memory image is put in a state of the memory image 1301. That is, the interrupt vector 2 (1320), the application 2 (1321), the OS 2 (1322), the interruption routine 2 (1323), and the data 2 (1324) which are areas shown with dots in the memory image 1301 are inhibited to be accessed. In this state, for example, when the application accesses the application 2 (1321) area, the comparing means 1105 outputs, for example, "2" indicating that the application 2 (1321) area belongs to the application 2 memory area 1204, so that the detection signal generating means 1108 consequently generates a detection signal on the basis of the "2" and "1" of the access information. As a result, for example, the interruption signal generating means 1106 receives the detection signal to generate a predetermined interruption to the CPU 102, for example, thereby stopping the processing of the CPU 102 or forcibly terminating the application which has performed an illegal access.

Subsequently, when the application 1 (1205) performs processing linked with the application 2 (1209), the application 1 (1205) writes a command to the application 2 (1209) and a code indicating the application 1 (1205) into the shared memory area 1202 (Step S1402-1 in Fig. 14).

Next, the application 1 (1205) transmits a predetermined signal from the CPU 102 to the interruption signal generating means 1106 using a command generating an interruption 2 (Step S1402-2 in Fig. 14). That is, it is sufficient for the application 1 (1205) to call an interruption routine 2 (1211) corresponding to the interruption 2. However, since a direct calling performed by an application (including an OS) weakens a security, an interruption processing is once performed by a hardware.

The interruption signal generating means 1106 which has received the above signal from the CPU transmits an interruption signal corresponding to the signal to the CPU 102, and it transmits information indicating that the interruption signal for performing the interruption processing 2 has been transmitted to the access information managing means 1107.

When the access information managing means 1107 receives the information indicating that the interruption signal has been transmitted, it changes the access information which the access information managing means 1107 stores therein to "2". Thereby, the memory image 1301 shown in Fig. 13 is changed to a memory image 1302, namely, the interrupt vector 1 (1310), the application 1 (1311), the OS 1 (1312), the interruption routine 1 (1313), and the data 1 (1314) which are areas shown with dots in the memory image 1302 become access inhibited states.

Also, the CPU 102 which has received the interruption signal performs processing corresponding to the interruption signal, namely, refers to the interrupt vector 2 (1320) corresponding to the interruption signal to execute the interruption routine 2 (1323).

In this state, the CPU 102 refers to a memory area (interruption routine 2) belonging to the application 2 memory area 1208. For this reason, the comparing means 1105 outputs, for example, "2" to the detection signal generating means 1108 on the basis of the address 1104 of the application 2 memory area.

However, since the access information has been already changed to "2" on the basis of the notification from the interruption signal generating means 1106, the detection signal generating means 1108 does not generate a detection signal.

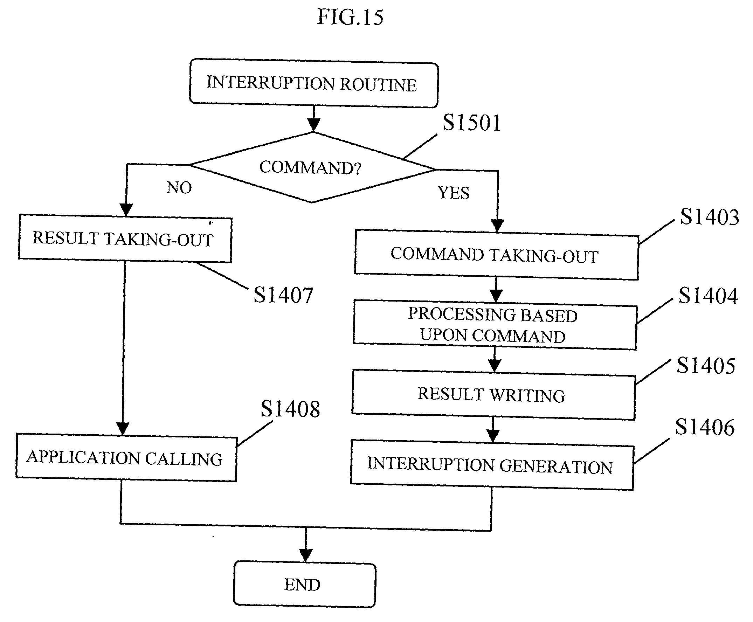

In the processing of the interruption routine 2 (1323), as shown in Fig. 14, 4a command stored in the shared memory area 1202 and a code indicating the application 1 are fetched (Step S1403 in Fig. 14). Subsequently, the interruption routine 2 (1323) performs processing based upon the fetched command, so that the result and the code indicating the application 1 are written in the shared memory area 1202 (Steps S1404 to S1405 in Figs. 14 and 15). Next, the interruption routine 2 (1323) generates an interruption 1 on the basis of the code indicating the fetched application 1. That is, a predetermined signal is transmitted from the CPU 102 to the interruption signal generating means 1106 using a command generating the interruption 1 (Step S1406 in Fig. 14).

The interruption signal generating means 1106 which has received the signal from the CPU transmits an interruption signal corresponding to the signal to the CPU 102, and it transmits to the access information managing means 1107 information indicating that an interruption signal for performing processing of the interruption 1 has been transmitted.

When the access information managing means 1107 receives the information indicating that the interruption signal has been transmitted, it changes the access information which the access information managing means 1107 stores to "1". Thereby, the memory image 1302 shown in Fig. 13 is changed to the memory image 1301, namely, the interrupt vector 2 (1320), the application 2 (1321), the OS 2 (1322), the interruption routine 2 (1323), and the data 2 (1324) which are areas shown with dots in the memory image 1301 are put in a state that access to them is inhibited, or an access-inhibiting state.

Also, the CPU 102 which has received the interruption signal performs processing corresponding to the interruption signal, namely, it refers to the interrupt vector 1 (1310) corresponding to the interruption signal to execute the interruption routine 1 (1313).

The interruption routine 1 (1313) refers to the shared memory area 1202 to fetch the result stored in the area (Step S1407 in Fig. 14). Also, an internal processing 2 continuous to the processing where the application 1 has generated the interruption 2 on the basis of the code indicating the application 1 is further called (Steps S1407 to S1408 in Fig. 14).

The application 1 (1205) which has been called by the interruption routine 1 (1207) performs the called internal processing 2 (Step S1409 in Fig. 14).

Thus, the cooperative processing of the application 1 and the application 2 has been terminated.

As described above, by cooperative processing between applications using an interruption processing performed by a hardware, it becomes unnecessary to update the address stored in the address storage means in the OS, that is, the address information update problem can be solved. Also, since the access information which has been stored in the access information managing means is updated on the basis of the interruption processing by the interruption signal generating means, it becomes possible to solve a problem where the OS changes the access information, namely, the access information update problem. Accordingly, this embodiment can solve the address information update problem and the access information update problem, and can provide an illegal access monitoring apparatus and an IC card where processing between application can be performed in a cooperative processing.

Incidentally, it is supposed that the processing of the application 1 is called from the application 2. Such a case can be solved by reading related portions of the application 1 and the application 2 in the above-described processing in an exchanging manner. In this case, however, it is necessary to prepare an interruption routine transmitting a command and an interruption routine sending a result separately from each other and prepare interruptions corresponding to the respective interruption routines. In order to eliminate the waste fulness, the interruption routine determines in processing (Step S1501) performed just after a start whether information stored in the shared memory area is a command or a result to be branched according to the determination, as shown in Fig. 15. Thereby, it is sufficient to provide only one interruption routine for one application performing processing linked with another application.

Also, by storing a program or an address for calling each interruption routine in, for example, the shared memory area like a command, a destination called can be set freely within a range allowed by the access monitoring means.

### Fifth Embodiment

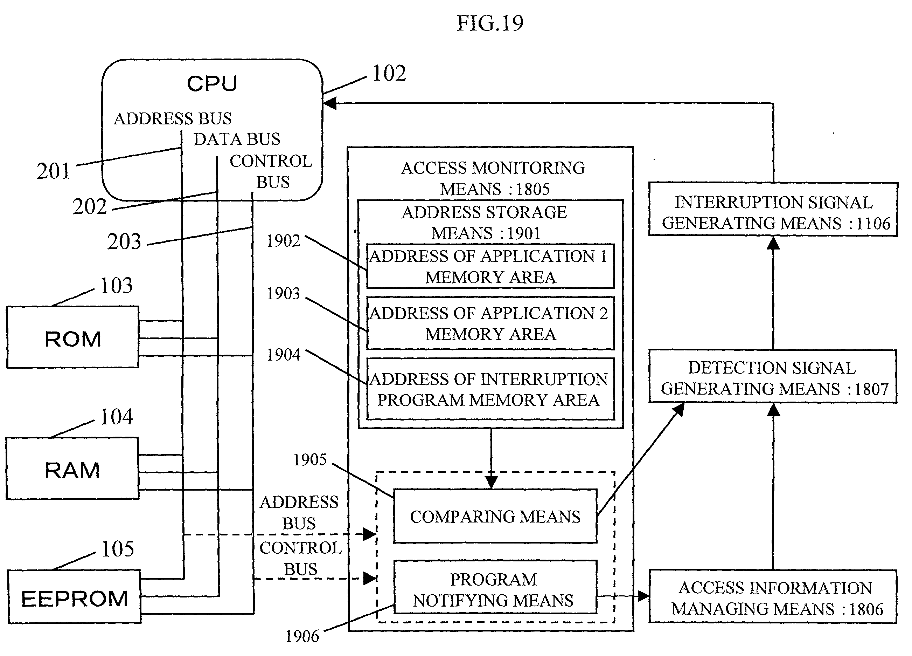

Subsequently, a monitoring processing for an illegal access different from the fourth embodiment will be explained with reference to Figs. 14 to 20.

In the above embodiment, for example, a series of programs stored in the application 1 memory area 1204 is configured by the application 1 (1420) shown in Fig. 14 and the interruption routine shown in Fig. 15, except for an OS. That is, in development of an application, a developer must consider a linkage of two of an application and an interruption routine. Therefore, it is anticipated that the description of the application and program becomes complicated, which results in lowering of a development efficiency.

In a fifth embodiment, an illegal access monitoring processing which does not depend on an OS and allows improvement in application development efficiency will be explained. In order to solve the address information update problem and the access information update problem, the fifth embodiment is configured as follows:

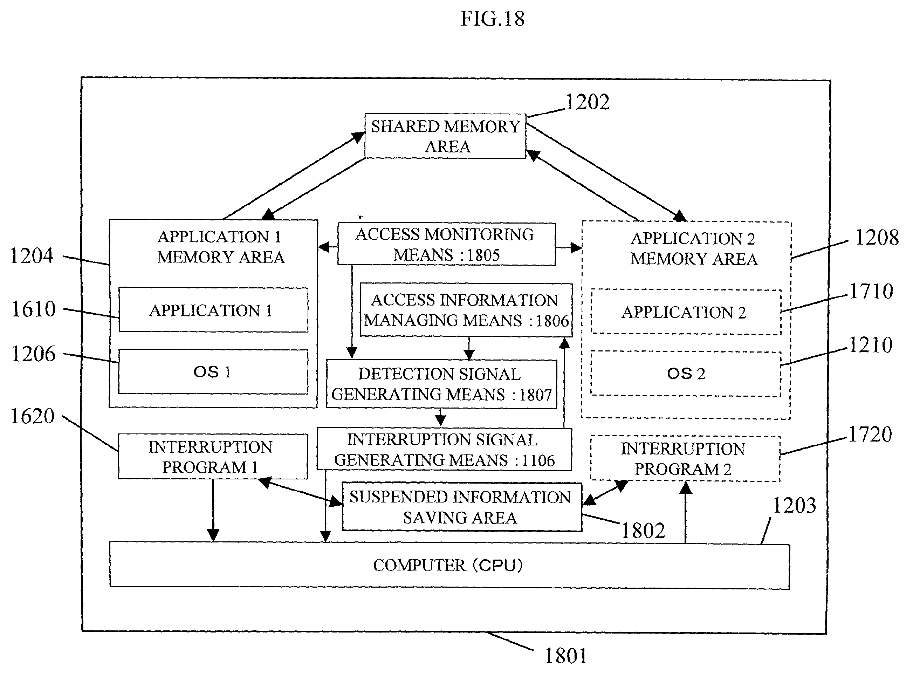

That is, an IC card 1801 shown in Fig. 18 has a configuration similar to the IC card 1201 in the fourth embodiment, and it has a suspended information saving area 1802 provided in a predetermined memory area. Further, access monitoring means 1805 is provided with address storage means 1901. Here, an address of each memory area stored in the address storage means 1901 are divided into
- an address 1902 of an application 1 memory area,
- an address 1903 of an application 2 memory area, and
- an address 1904 of an interruption routine memory area,
and it is further fixed so as not to be rewritten by a program.

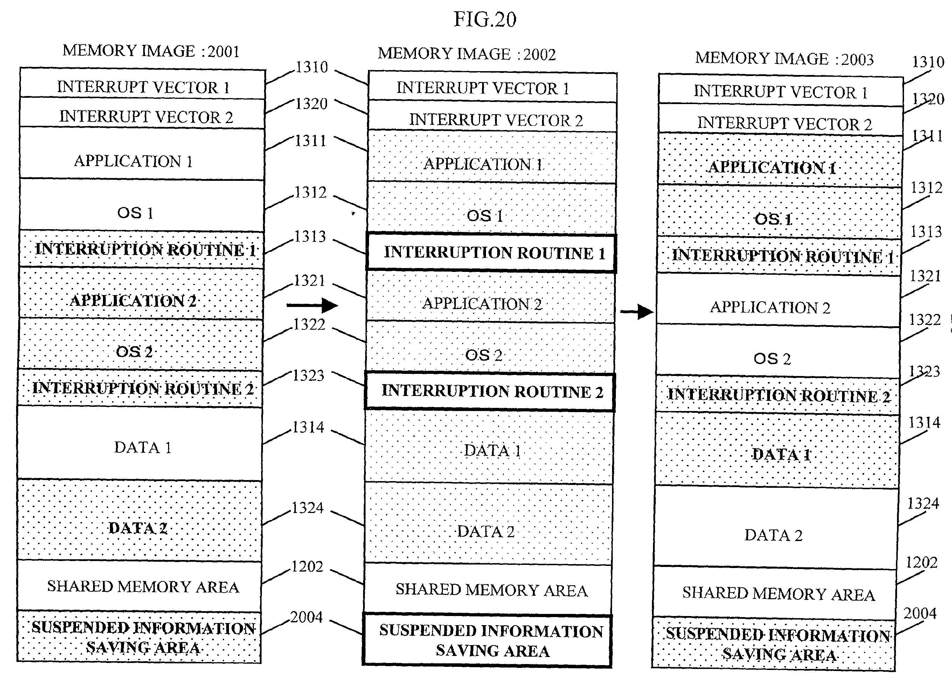

Furthermore, addresses of memory areas shown with a white background in a memory image 2001 in Fig. 20 are stored in the address 1902 of the application 1 memory area. That is, the address 1902 is configured with the addresses of the memory area of the application 1 (1311) and the OS 1 (1312), the data 1 (1314) which is a memory area to which these programs [the application 1 (1311) and the OS 1 (1312)] are accessible, the interrupt vector 1 (1310), the interrupt vector 2 (1320), and the shared memory area 1202. The application 1 (1311) corresponds to the application 1 (1610) in Fig. 18, and the OS 1 (1312) corresponds to the OS 1 (1206) in Fig. 18.

Also, addresses of memory areas shown with a white background in a memory image 2003 in Fig. 20 are stored in the address 1903 of the application 2 memory area. That is, the address 1903 is configured with the addresses of the memory area of the application 2 (1321) and the OS 2 (1322), the data 2 (1324) which is a memory area to which these programs [the application 2 (1321) and the OS 2 (1322)] are accessible, the interrupt vector 1 (1310), the interrupt vector 2 (1320), and the shared memory area 1202. The application 2 (1321) corresponds to the application 2 (1710) in Fig. 18, and the OS 2 (1322) corresponds to the OS 2 (1210) in Fig. 18.

Furthermore, addresses of memory areas shown with a white background in a memory image 2002 in Fig. 20 are stored in the address 1904 of the interruption routine memory area. That is, the address 1904 is configured with the addresses of the interruption routine 1 (1313), the interruption routine 2 (1323) and the suspended information saving area 2004. The interruption routine 1 (1313) and the interruption routine 2 (1323) correspond to the interruption routine 1 (1620) and the interruption routine 2 (1720) shown in Fig. 18, respectively. Also, the suspended information saving area 2004 corresponds to the suspended information saving area 1802.

Accordingly, it is considered that the address of each memory area stored in the address storage means 1901 is defined such that a memory area where a predetermined program has been stored and a memory area accessible by the program configure one unit.

Also, the access monitoring means 1805 are provided with comparing means 1905 and program notifying means 1906 which will be explained in detail later.

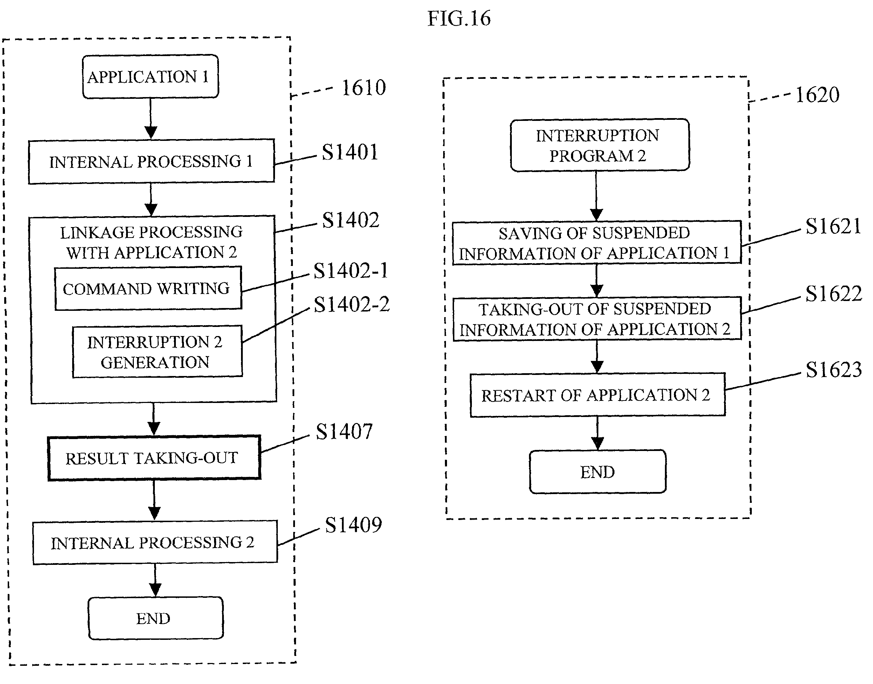

Subsequently, considering the above configuration, an operation of each application will be explained below. Incidentally, with the above configuration, the processing of the application 1 shown in the fourth embodiment can be shown as the application 1 (1610) in Fig. 16.

First, when the application 1 (1610) performs processing, the CPU 102 reads an application 1 from the application 1 (1311) which is a memory area where the application 1 (1610) has been stored. At this time, the address of the memory area of the application 1 (1311) is sent to the address bus 201 and an instruction taking-in signal indicating reading-out of a program is sent to the control bus 203.

When the address and the instruction taking-in signal are transmitted, the signal is transmitted to the access monitoring means 1805 which is monitoring the bus. That is, the address is transmitted to the comparing means 1905 and the instruction taking-in signal is transmitted to the program notifying means 1906.

When the comparing means acquires the address, it refers to the address storage means 1901 to make a determination about which application (program) the address corresponds to. Here, since a program being executed is the application 1 (1610), it is determined that the address corresponds to the address 1902 of the application 1 memory area.

When the comparing means 1905 determines the application corresponding to the address, it transmits information on the application to the detection signal generating means 1807. Here, the application is, for example, "1".

Also, the comparing means 1905 notifies information indicating that the application corresponding to the address is "1" to the program notifying means 1906.

On the other hand, the program notifying means 1906 transmits "1" indicating the program being currently executed to the access information managing means 1806 on the basis of the instruction taking-in signal which has been transmitted from the control bus and "1" which has been acquired from the comparing means.

The access information managing means 1806 changes the access information to "1" on the basis of information which has been transmitted from the program notifying means 1906. The "1" indicates that the program being currently executed corresponds to the application 1.

Thus, the image memory indicating whether or not an access to the memory area is allowed is changed to the image memory 2001 shown in Fig. 20. That is, the program 1 (1313), the application 2 (1321), the OS 2 (1322), the interruption routine 2 (1323), the data 2 (1324), and the suspended information saving area 2004 are put in a state where an access thereto is inhibited.

As described above, the access monitoring means can determine a program being accessing a memory area on the basis of the information items from the address storage means 1901, the address bus and the control bus.

Subsequently, after the application 1 (1610) is read out by the CPU 102, the application 1 (1610) performs an internal processing 1 (Step S1401 in Fig. 16). The processing content of the internal processing 1 may be the same as that shown in the fourth embodiment.

It is assumed that, for example, the application 1 (1610) has accessed the data 1 (1314) on the basis of the internal processing 1. In this case, the address of the data 1 (1314) is transmitted to the comparing means 1905 via the address bus 201, and the comparing means 1905 refers to the address storage means 1901 to transmit "1" indicating that the address corresponds to the address 1902 of the application 1 memory area to the detection signal generating means 1807.

In this case, an instruction taking-in signal is not transmitted to the control bus because of referring to the data 1 (1314), and the program notifying means 1906 does not notify a program being executed to the access information managing means 1806. That is, the access information remains as "1".

The detection signal generating means 1807 determines that the access to the memory area is not problematic on the basis of the "1" transmitted from the comparing means 1905 and the "1" acquired from the access information managing means 1806 and it does not generate an illegal access detection signal.

However, in such a case that the application 1 (1610) referred to, for example, the data 2 (1324), the comparing means 1905 transmits, for example, "2" indicating that the address being accessed is the address 1903 of the application 2 memory area to the detection signal generating means 1807. For this reason, on the basis of the "2" acquired from the comparing means 1905 and the "1" acquired from the access information managing means 1806, the detection signal generating means 1807 determines that the access to the memory area is an illegal access to generate an illegality detection signal.

Now, the internal processing 1 is a processing that is not accompanied with the linkage with the application 2 (1710). Here, when the application 1 (1610) performs a linkage process with the application 2 (1710), an interruption 2 is generated after a command is written in the shared memory area like the fourth embodiment (Step S1402-1 → Step S1402-2 in Fig. 16).

When the interruption 2 is generated, the interrupt vector 2 (1320) is referred to by the CPU 102 (application 1) and the interruption routine 2 is read out. At this time, since the CPU 102 reads out the interruption routine 2, the comparing means 1905 transmits, for example, "3" indicating that the address being currently accessed corresponds to the address 1904 of the interruption routine memory area to the detection signal generating means 1807 on the basis of the information obtained from the address bus.

Also, the program notifying means transmits "3" indicating the program being currently executed to the access information managing means 1806 on the basis of the "3" obtained from the comparing means 1906 and the instruction taking-in signal obtained from the control bus 203, so that the access information is changed to "3", for example.

Thus, the memory image indicating whether or not an access to the memory area is allowed becomes the memory image 2002 shown in Fig. 20. That is, the application 1 (1311), the application 2 (1321), the OS 1 (1312), the OS 2 (1322), the data 1 (1314), the data 2 (1324), and the suspended information saving area 2004, which are areas shown with dots in the memory image 2002 are put in a state where access thereto is inhibited. However, as described above, since the interruption routine may be provided as a fixe program, for example, all areas may be accessible.

As described above, even when the program to be executed is changed from the application 1 (1610) to the interruption routine 2 (1620), the detection signal generating means 1807 does not generate an illegality detection signal.

Subsequently, the interruption routine 2 (1620) read by the CPU 102 performs the following processings.

That is, the interruption routine 2 (1620) first stores all of the storage areas such as registers or the like which are present in the CPU 102 in the suspended information saving area 2004 as suspended information, so that restart is allowed just after the application 1 (1610) generates an interruption 2 (Step S1621 in Fig. 16).

Subsequently, suspended information on the application 2 (1710) which has been previously stored in the suspended information saving area 2004 is taken out to restart the application 2 (1710) (Step S1622 → Step S1623 in Fig. 16). However, when there is no suspended information, the application 2 (1702) is performed from the beginning.

When the application 2 (1710) restarts, the application 2 (1710) is read by the CPU 102. At this time, since the CPU 102 reads the application 2 (1710), the comparing means 1905 transmits, for example, "2" indicating that an address being currently accessed corresponds to the address 1903 of the application 2 memory area to the detection signal generating means 1807 on the basis of the information obtained from the address bus.

Also, the program notifying means transmits "2" indicating a program being currently executed to the access information managing means 1806 on the basis of the "2" obtained from the comparing means 1906 and the instruction taking-in signal obtained from the control bus 203, so that the access information is changed to "2", for example.

Thus, the memory image indicating whether or not an access to a memory is allowed becomes the memory image 2003 shown in Fig. 20. That is, the application 1 (1311), the OS 1 (1312), the interruption routine 1 (1313), the interruption routine 2 (1323), the data 1 (1314), the suspended information saving area 2004, which are areas shown with dots in the memory image 2003, are put in a state where an access to them is inhibited.

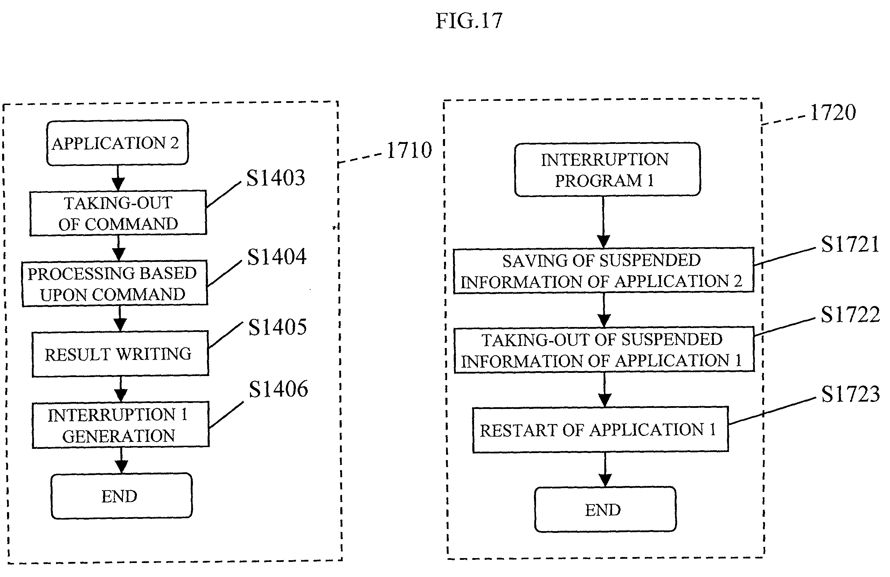

Thereafter, the application 2 (1710) takes out a command from the shared memory area 1202 to perform processing, writing of the result and the like, which proceed like the fourth embodiment and therefore details thereof will be omitted (Steps S1403 to S1405 in Fig. 17).

Then, the application 2 (1710) generates an interruption 1 (Step S1406 in Fig. 17).

When the interruption 1 is generated, processing is transferred to the interruption routine 1 (1720) and the access information of the access information managing means 1806 is changed to the "3" in the same manner as the case that the interruption 2 has been generated.

Next, the interruption routine 1 (1720) first stores all of the storage areas such as registers or the like which are present in the CPU 102 in the suspended information saving area 2004 as suspended information, so that restart is allowed just after the application 2 (1710) generates an interruption 2 (Step S1721 in Fig. 17). Incidentally, in this example, since the application 2 (1710) has terminated its processing, the application 2 (1710) is executed from its beginning at a time of restart.

Subsequently, the suspended information of the application which has been previously stored in the suspended information saving area 2004 is taken out to restart the application 1 (1610) (Step S1722→Step S1723 in Fig. 17). Since each storage area within the CPU 102 returns back just after the application 1 (1610) has performed the processing of the interruption 2 by taking out the suspended information, the application 1 (1610) takes out the following result to process the same (Step S1407 in Fig. 17). Like the above, the access information is changed to "1" by monitoring the address bus 201 and the control bus 203.

The application 1 (1610) takes out the result which the application 2 (1710) has written from the shared memory area 1202 in the same manner as the result taking-out processing shown in the fourth embodiment and it performs an internal processing 2 continuous thereto (Step S1407 → Step S1409 in Fig. 16).

Now, each processing of the applications 1, 2 and the interruption routines 1, 2 has been described above. As a result, the processing of the application 1 (1610) can be described as a series of processings or steps including a linkage processing with the application 2, as shown in Fig. 16. Also, the application 2 (1710) can be described as a series of processings or steps from a command taking-out to processing termination. Furthermore, since the interruption routine 1 (1720), the interruption routine 2 (1620), and the applications 1, 2 are completely independent processings from one another, it becomes possible to describe, for example, the ROM 103 in the memory area in advance.

As described above, the memory area where a predetermined program (s) has been stored and the memory area to which an access is allowed by the program are stored as one unit, so that it becomes unnecessary to update the address stored in the address storage means by the OS, namely, the above address information update problem can be solved.

Also, since the comparing means performs notification of the program corresponding to the address being accessed as the monitored result and the program notifying means performs notification of the program being executed so that the access information managing means updates the access information, it is possible to solve the problem that the OS changes the access information, i.e., the above access information update problem, too.

Further, as shown in Figs. 16 and 17, since the application can be described as a series of processings or steps, it is made possible to improve a development efficiency of an application.

### Sixth Embodiment

Though the method for preventing an illegal processing performed by a program by monitoring an access to a predetermined memory area has been explained in the first to fifth embodiments, processing of an illegal access monitoring apparatus having a robustness to a reverse engineering will be explained in the sixth embodiment.

The term "reverse engineering" means analyzing a product or article to investigate its specification, basic design or the like, and the reverse engineering is abused in some cases. For example, there is a possibility that the function of the above illegal access monitoring apparatus may be nullified by analyzing the operation of the CPU in the first to fifth embodiments to anticipate the access monitoring means and the detection signal generating means.

In view of the above, an illegal access monitoring apparatus having a robustness to the above reverse engineering is provided in the sixth embodiment.

First, before the illegal access monitoring apparatus according to the sixth embodiment is explained, one means for a reverse engineering will be explained briefly.

In general, since a CPU provided in an IC card or the like has a fast clock speed, it is much difficult to analyze each operation thereof. Therefore, each operation is analyzed by applying a slower clock than an ordinary one to the CPU.

Accordingly, in the sixth embodiment, a determination is made about whether or not a clock applied to the CPU is normal and the operation of the CPU is, for example, stopped when it is determined that the clock is not normal.

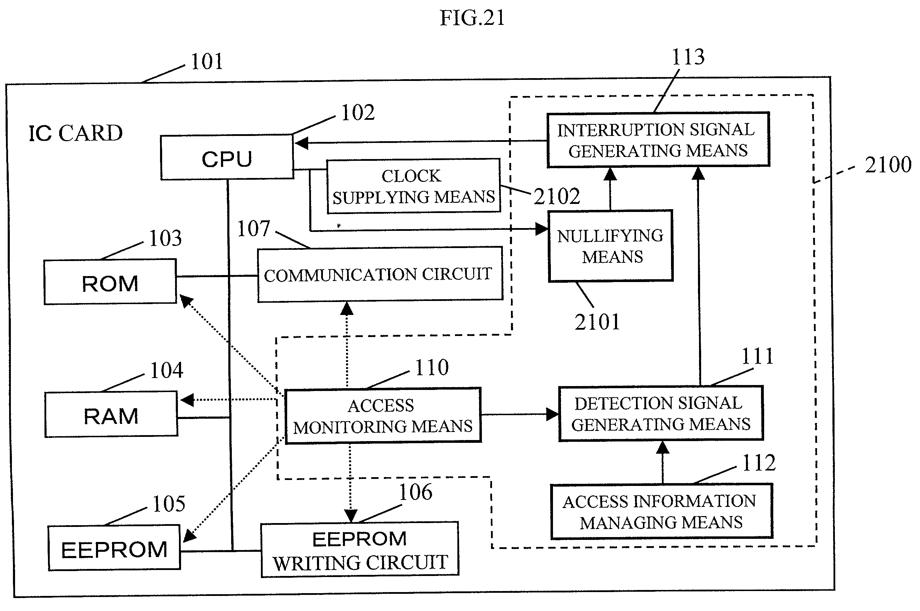

That is, an illegal access monitoring apparatus 2100 according to the sixth embodiment is provided with nullifying means 2101 in addition to the illegal access monitoring apparatus 100 in the first embodiment, as shown in Fig. 21. The nullifying means 2101 inputs a clock applied to the CPU 102 from clock supplying means 2102 and it determines whether or not the speed of the clock is normal. Here, the clock supplying means 2102 is one which has conventionally been provided for determining the processing speed of the CPU.

A process or method where the nullifying means 2101 determines whether or not a clock applied to the CPU is normal will be explained below.

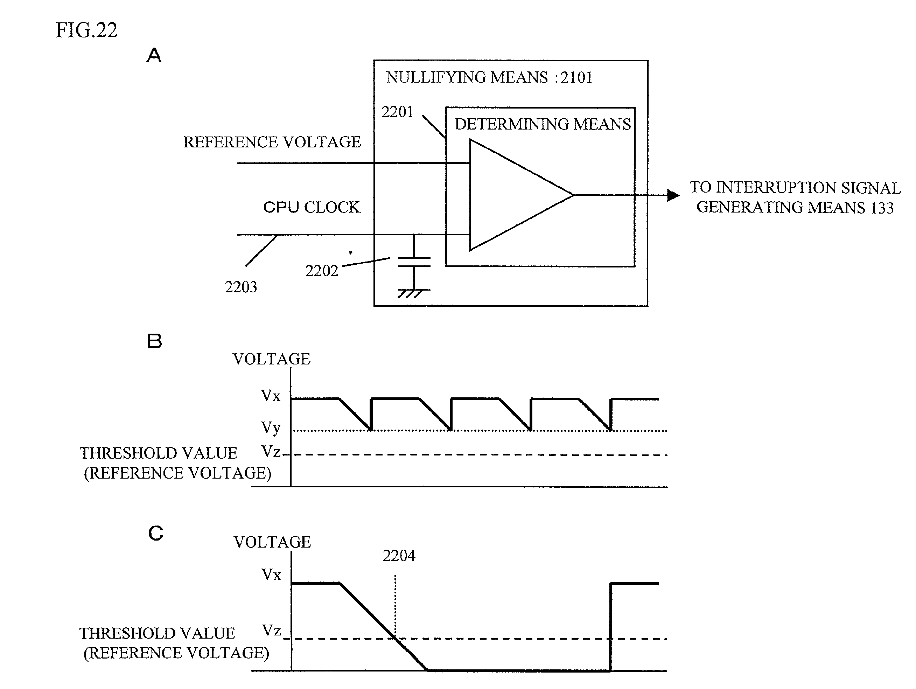

In a first example of the process, for example, as shown in Fig. 22A, the nullifying means 2101 is inputted with a clock (CPU clock) applied to the CPU and a reference voltage. Here, a condenser 2202 is connected to a line 2203 inputted with the CPU clock, and it delays a drop of a voltage value of the CPU clock.

A voltage image of the CPU clock obtained in case that the CPU clock is normal is shown in Fig. 22B. That is, the CPU clock applied to determining means 2201 constituting the nullifying means 2101 with a constant voltage Vx has the lowermost value of a voltage Vy. Incidentally, the voltage Vy is set so as not to becomes below the reference voltage Vz which is a threshold value (Vx > Vy > Vz).

Here, for example, for a reverse engineering, an illegal clock is applied to the CPU 102. As described above, the illegal clock means a clock having a speed slower than that of a normal clock. For this reason, the voltage image of the CPU clock becomes the reference voltage Vz or less, for example, as shown in Fig. 22C. When the CPU clock is below the reference voltage Vz which is the threshold value (at a point 2204), the determining means 2201 transmits an illegality detection signal to the interruption signal generating means 113.

The interruption signal generating means 113 which has received the illegality detection signal transmits an interruption signal to the CPU 102.

The CPU 102 which has received the interruption signal opposes the above reverse engineering, for example, by stopping the processing of the CPU 102 or running a predetermined interruption routine.

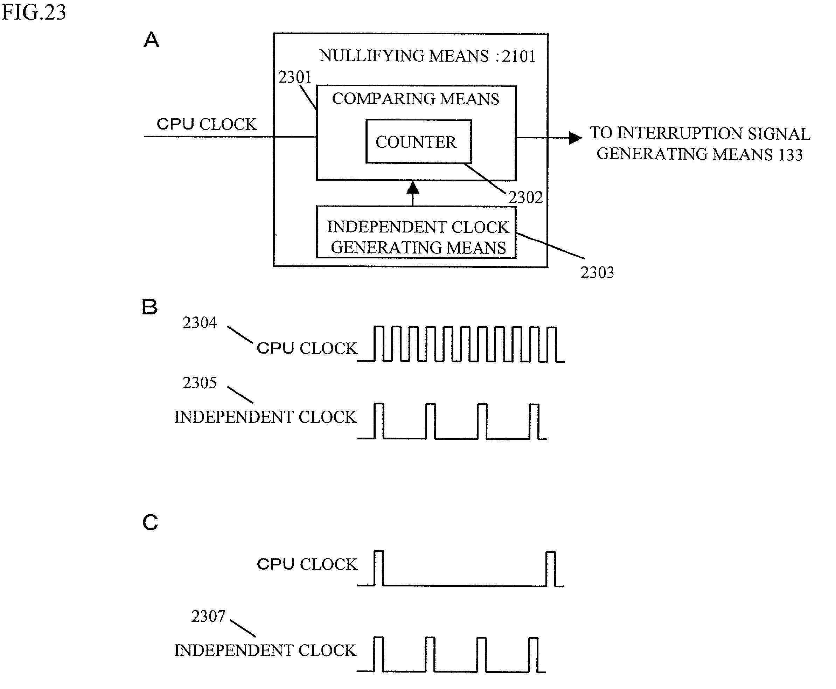

Subsequently, a second example will be explained. In the second example, the nullifying means 2101 is inputted with a clock (CPU clock) applied to the CPU, as shown in fig. 23A. Also, independent clock generating means 2303 which generates a clock independent of the CPU clock and a counter 2302 which counts pulses of independent clock from the independent clock generating means 2303 are provided in the nullifying means 2101.

On the basis of the above configuration, the processing of the nullifying means 2101 will be explained below.

First, the counter 2302 counts independent clocks given from the independent clock generating means 2303. However, when the counter 2302 receives a pulse of the CPU clock, its count value is made zero (is reset). Incidentally, when the count number of the independent clock pulses becomes 2, the determining means 2301 determines that the CPU clock is illegal.

Here, an image obtained when a normal clock is applied is shown in Fig. 23B. That is, the pulses of the independent clock 2305 are counted by the above counter 2302, but the CPU clock 2304 resets the counter immediately since it is sufficiently fast.

In this state, the count number is not 2. That is, the CPU clock is in a normal state.

Here, for example, it is assumed that, for performing a reverse engineering, an illegal clock is applied to the CPU 102. As described above, the illegal clock means a clock having a speed slower than that of a normal clock. Therefore, the counter 2302 counts the pulses of the independent clock 2307 a plurality of times (two times or more) (shown in Fig. 23C) . In this case, the determining means 2301 transmits an illegality detection signal to the interruption signal generating means 113.

The processings performed thereafter are similar to those of the first example.

As described above, the nullifying means is inputted with a clock applied to the CPU to determine whether or not the speed of the clock is normal and transmit an illegality detection signal according to the determination, so that it becomes possible to prevent analyzing of each operation performed by a reverse engineering for applying a clock slower than a normal clock to a CPU.

The access monitoring means monitors an access to a predetermined memory area, and the detection signal generating means generates an illegal detecting signal which shows the presence of an illegal access on the basis of the monitoring result by the access monitoring means and access information. Therefore, by knowing an access to a memory area to which an access performed by an application is inhibited, various troubles such as disappearing or leakage of important information due to a malicious application are prevented from occurring.

By providing interruption signal generating means which transmits an interruption signal to the CPU when an illegality detection signal generated by the detection signal generating means is received, a predetermined program can be executed when there has been an illegal access, various countermeasures can be taken against the illegal access.

Also, the access monitoring means comprises address storage means in which an address of the predetermined memory area has been stored and comparing means which compares an address acquired from an address bus utilized when the CPU accesses the memory area and the address of the predetermined memory area which has been stored in the address storage means with each other to monitor an access to the predetermined memory area, so that access monitoring operations corresponding to various access aspects (reading, writing, and the like) of the CPU can be allowed.

Furthermore, the access information managing means is configured so as to control an access information on the basis of an instruction received via a predetermined interface used when an application utilizes a function provided by OS, and API is used as the predetermined interface so that access information can easily be managed by using the conventional art.

In addition, by cooperative processings between applications using an interruption processing performed by a hardware, a malfunction of a software (program) or an illegal access can securely be prevented so that it is possible to solve a problem about an address information updating and an access information updating described later and link processings between the applications.

Furthermore, as a configuration for preventing a reverse engineering, such a configuration can be employed that determination means to which a clock is input from clock supplying means supplying clocks to the CPU to determine whether or not the rate of the clock is normal and nullifying means which transmits an illegality detection signal to the interruption signal generating means on the basis of the result obtained by the determination of the determining means are provided.

## Claims

1. An illegal access monitoring apparatus which monitors an illegal access to a memory area, comprising:
access monitoring means of monitoring an access to a predetermined memory area; and
detection signal generating means of generating an illegality detection signal indicating that there is an illegal access on the basis of the monitored result of the access monitoring means and an access information which is information which can discriminate a program being accessed to the memory area.

2. The illegal access monitoring apparatus according to claim 1, further comprising:
access information managing means of managing the access information,
wherein the detection signal generating means generates an illegality detection signal indicating that there is an illegal access on the basis of the monitored result of the access monitoring means and access information received from the access information managing means.

3. The illegal access monitoring apparatus according to claim 2, further comprising interruption signal generating means of transmitting an interruption signal to a CPU (Central Processing Unit) on the basis of the illegality detection signal generated by the detection signal generating means.

4. The illegal access monitoring apparatus according to claim 3, wherein the access monitoring means comprises
address storage means of storing an address of the predetermined memory area; and
comparing means of comparing an address acquired from an address bus utilized when the CPU accesses the memory area and the address of the predetermined memory area which has been stored in the address storage means with each other to monitor an access to the predetermined memory area.

5. The illegal access monitoring apparatus according to claim 4, wherein the access monitoring means further monitors a control bus which transmits an instruction when the CPU accesses the memory area and output the monitored result according to the instruction.

6. The illegal access monitoring apparatus according to claim 1, wherein the access information indicates whether or not an access to the memory area is an access performed by an OS.

7. The illegal access monitoring apparatus according to claim 2, wherein the access information managing means changes the access information on the basis of the instruction which the OS has transmitted when an interface for providing a function of the OS to an application is utilized by the application.

8. The illegal access monitoring apparatus according to claim 7, wherein the interface is an API (Application Program Interface).

9. The illegal access monitoring apparatus according to claim 1, wherein the predetermined memory area includes at least one of an OS storage area, an OS work area, an application storage area, and a user information storage area.

10. The illegal access monitoring apparatus according to claim 1, wherein the predetermined memory area includes a communication circuit utilized for a communication with the outside or a rewritable non-volatile memory writing circuit.

11. The illegal access monitoring apparatus according to claim 3, wherein
the access monitoring means comprises
address storage means of storing the address of the predetermined memory area containing an area storing a predetermined program and an area allowed to be accessed by the predetermined program per programs, and
comparing means of notifying a program corresponding to an address being accessed as the monitored result on the basis of an address acquired from an address bus utilized when the CPU accesses the memory area and the address which has been stored in the address storage means;
the interruption signal generating means transmits an interruption signal according to an instruction from the CPU and transmits information to the access information managing means, the information indicated that the interruption signal has been transmitted;
the access information managing means changes the access information indicating the program which is accessing the memory area on the basis of the information indicating that the interruption signal has been generated from the interruption signal generating means; and
the detection signal generating means generates the illegality detection signal on the basis of the monitored result of the access monitoring means and the access information.

12. The illegal access monitoring apparatus according to claim 11, wherein the predetermined memory area is provided with a shared memory area which is not a target to be monitored by the access monitoring means.

13. The illegal access monitoring apparatus according to claim 3, wherein
the access monitoring means comprises
address storage means of storing the address of the predetermined memory area containing an area storing a predetermined program and an area allowed to be accessed by the predetermined program per programs,
comparing means of notifying a program corresponding to an address being accessed as the monitored result on the basis of an address acquired from an address bus utilized when the CPU accesses the memory area and the address which has been stored in the address storage means, and
program notifying means of monitoring a control bus transmitting an instruction when the CPU accesses the memory area and notifying a program which is being executed on the basis of the instruction, the address acquired from the address bus and the address which has been stored in the address storage means;
the access information managing means changes the access information indicating a program which is accessing the memory area on the basis of the notification from the program notifying means; and
the detection signal generating means generates the illegality detection signal on the basis of the monitored result of the access monitoring means and the access information.

14. The illegal access monitoring apparatus according to claim 13, wherein the predetermined memory area is provided with a shared memory area which is not a target to be monitored by the access monitoring means.

15. The illegal access monitoring apparatus according to claim 3, further comprising:
determining means of determining whether or not the speed of the clock is normal by being input with a clock from clock supplying means applying a clock to the CPU; and
nullifying means of transmitting an illegality detection signal to the interruption signal generating means on the basis of the determination result of the determining means.

16. The illegal access monitoring apparatus according to claim 15, wherein the determining means determine whether or not the speed of the clock applied to the CPU is normal by comparing the input clock and a reference voltage which is a threshold value for transmission of the illegality detection signal with each other.

17. The illegal access monitoring apparatus according to claim 15, wherein the determining means determines whether or not the speed of the clock applied to the CPU is normal by comparing the input clock and a clock generated from an independent clock generating means generating a clock independent of a clock applied to the CPU with each other.

18. An IC (Integrated Circuit) card which is provided with an illegal access monitoring apparatus according to any one of claims 1 to 17.

19. An illegal access monitoring method for monitoring an illegal access to a memory area, comprising:
an access monitoring step of monitoring an access to a predetermined area; and
a detection signal generating step of generating an illegality detection signal indicating that there is an illegal access on the basis of the monitored result in the access monitoring step and access information, the information can discriminate a program which is accessing the memory area.

20. The illegal access monitoring method according to claim 19, further comprising an access information managing step of managing the access information, wherein
the detection signal generating step receives the access information from the access information managing step.

21. The illegal access monitoring method according to claim 20, further comprising an interruption signal generating step of transmitting an interruption signal to a CPU (Central Processing Unit) on the basis of the illegality detection signal generated in the detection signal generating step.
